# EUROPÄISCHE PATENTSCHRIFT

(11) **EP 3 585 179 B1**
(45) Veröffentlichungstag und Bekanntmachung des Hinweises auf die Patenterteilung: **17.08.2022**
(21) Anmeldenummer: 18713785.6
(22) Anmeldetag: 21.02.2018
(51) Int. Cl.: A23G 1/00, A23G 1/12, A23G 1/16

(54) **CONCHIERVORRICHTUNG UND VERFAHREN ZUM CONCHIEREN EINER PRODUKTMASSE**
CONCHING APPARATUS AND METHOD FOR CONCHING A PRODUCT MASS
DISPOSITIF DE CONCHAGE ET PROCÉDÉ POUR LE CONCHAGE D'UNE MASSE DE PRODUIT

(30) Priorität: 24.02.2017 DE 102017001784
(43) Veröffentlichungstag der Anmeldung: 01.01.2020
(60) Teilanmeldung: 22181979.0
(73) Patentinhaber: NETZSCH-Feinmahltechnik GmbH, 95100 Selb (DE)
(72) Erfinder: HARBS, Theron, 95100 Selb (DE); KAPP, Matthias, 91365 Weilersbach (DE); DEVEGILI, Sergio, 89121-000 Rio doe Cedros Pomerode - SC (BR)
(74) Vertreter: Beyer, Andreas
(86) Internationale Anmeldenummer: PCT/DE2018/000045
(87) Internationale Veröffentlichungsnummer: WO 2018/153392

(56) Entgegenhaltungen:
- DE-A1- 3 603 155
- DE-A1- 4 221 315
- DE-A1- 4 433 039
- DE-A1- 19 636 989
- DE-A1- 19 637 098
- DE-A1- 19 835 347
- GB-A- 2 523 271
- US-A- 5 707 145

## Beschreibung

Die vorliegende Erfindung betrifft eine Conchiervorrichtung und ein Verfahren zum Conchieren einer Produktmasse.

Eine Conchiervorrichtung (auch Conche genannt) ist eine Vorrichtung, um eine Lebensmittelproduktmasse zu bearbeiten, insbesondere bei der Schokoladenherstellung. Mit einer solchen Vorrichtung können Rohstoffe wie zum Beispiel Kakaomasse, Zucker, Kakaobutter und/oder Milchpulver vermengt und dem Fachmann in bekannter Weise unter Ausüben von Kompression- und/oder Scherkräften bearbeitet werden. Letzteres wird allgemein auch als Conchieren bezeichnet und dient unter anderem dazu, Feuchtigkeit und damit Stoffe mit unerwünschten Eigenschaften wie zum Beispiel Essigsäure oder Aldehyde auszutragen.

Das Conchieren ist ein wichtiger Prozessschritt, der die Qualität und den Geschmack des Endproduktes maßgeblich bestimmen kann. Ferner handelt es sich um einen vergleichsweise zeitintensiven Prozessschritt, der sich durch einen entsprechend hohen Energiebedarf auszeichnet.

Eine gattungsgemäße Conchiervorrichtung ist aus der DE 196 36 989 A1 bekannt. Weitere Conchier- bzw. Mischvorrichtungen mit einem kreiszylindrischen Mischbehälter oder mehreren parallel zueinander angeordneten Mischbehältern mit kreiszylindrischer Grundform sind aus den Dokumenten DE 198 35 347 A1, DE 196 37 098 A1, GB 2 523 271 A1, DE 42 21 315 A1, US 5 707 145 und DE 36 03 155 A1 bekannt. Die Dokumente DE 44 33 039 A1 und DE 196 37 098 A1 zeigen Conchier- bzw. Mischvorrichtungen mit einem kegelstumpfförmigen Mischbehälter.

Es hat sich gezeigt, dass mit den bekannten Vorrichtungen und Verfahren nicht immer eine gewünschte Produktqualität erzielbar ist, insbesondere wenn dies effizient und energiesparend erfolgen soll.

Der Erfindung liegt daher die Aufgabe zu Grunde, eine Conchiervorrichtung und ein Verfahren zum Conchieren einer Produktmasse bereitzustellen, die eine hohe Produktqualität bei verbesserter Effizienz ermöglichen.

Zur Lösung dieses Problems schlägt die Erfindung eine Conchiervorrichtung mit den im Patentanspruch 1 angegebenen Merkmalen und ein Verfahren mit den im Patentanspruch 17 angegebenen Merkmalen vor.

Die erfindungsgemäße Conchiervorrichtung umfasst einen Behälter, der einen Aufnahmeraum für eine Produktmasse bildet. Der Behälter kann geschlossen oder zumindest abschnittsweise offen ausgebildet sein. Mit anderen Worten kann der Aufnahmeraum die Produktmasse im Wesentlichen vollständig umgeben. Dabei kann der Aufnahmeraum und/oder Behälter aber auch durch Öffnungen oder Zuführkanäle zumindest lokal unterbrochen und geöffnet sein.

Der Aufnahmeraum kann durch eine Behälterinnenwand und/oder einen Innenquerschnitt des Behälters umgrenzt werden. Die Behälterinnenwand und somit der Aufnahmeraum können ferner beheizbar oder kühlbar sein, zum Beispiel über in der Behälterwand angeordnete Kanäle und/oder Rohre, durch die ein beheiztes Fluid geleitet wird. Der Behälter kann eine im Wesentlichen gleichartige Form wie der Aufnahmeraum aufweisen. Anders ausgedrückt kann eine Gestalt des Außenquerschnitts des Behälters zumindest über einen Großteil dessen axialer Länge im Wesentlichen der Gestalt seines Innenquerschnitts entsprechen, wobei Letzterer den Aufnahmeraum bilden kann.

Die Produktmasse kann wenigstens eine der Zutaten Kakaomasse, Zucker, Kakaobutter, Milchpulver und Fett umfassen. Allgemein kann es sich um eine auf Fettmassen basierende Produktmasse zur Herstellung von Genussmitteln handeln, insbesondere zur Herstellung von Schokolade.

Erfindungsgemäß umfasst die Conchiervorrichtung ferner eine zumindest abschnittsweise in dem Behälter aufgenommene Welle, die dazu ausgebildet Ist, um ihre Längsachse zu rotieren. Die Welle kann sich ferner zumindest abschnittsweise durch den Aufnahmeraum erstrecken. In einer Ausführungsform erstreckt sich die Welle im Wesentlichen zentral durch den Behälter und/oder Aufnahmeraum und insbesondere derart, dass der Behälter und/oder Aufnahmeraum sich im Wesentlichen rotationssymmetrisch um die Welle erstrecken. Abweichungen von der Rotationssymmetrie können sich durch lokale Öffnungen oder Zuführkanäle in dem Behälter und/oder dem Aufnahmeraum ergeben.

Im Rahmen der vorliegenden Offenbarung können sich die Begriffe "axial" und "radial" auf die Längsachse der Welle beziehen, sofern nicht anders angegeben oder ersichtlich. Ferner kann im Rahmen der vorliegenden Offenbarung allgemein vorgesehen sein, dass die Wellenlängsachse einer Horizontalen im Raum entspricht, so dass sich die radialen Erstreckungen auf eine Vertikale im Raum beziehen können. Die Begriffe "oberhalb" und "unterhalb" können eine Position vertikal oberhalb oder vertikal unterhalb der Wellenlängsachse oder einer die Wellenlängsachse enthaltenden horizontalen Ebene betreffen. Zum Beispiel kann eine Position unterhalb der Wellenlängsachse eine Position zwischen der Wellenlängsachse und einem Bodenbereich In der Umgebung der Conchiervorrichtung betreffen.

Die Welle kann im Wesentlichen zylindrisch und/oder langgestreckt ausgebildet sein. Die Welle kann sich ferner von einem Ende zu einem gegenüberliegenden Ende des Behälters oder Aufnahmeraums erstrecken und optional auch darüber hinaus, um beidseitig innerhalb der Vorrichtung gelagert zu werden.

Die Conchiervorrichtung umfasst ferner wenigstens ein Conchierwerkzeug, das mit der Welle zur gemeinsamen Rotation gekoppelt ist, sodass das Conchierwerkzeug in einem Conchierbetrieb der Vorrichtung in einer ersten Umlaufrichtung entlang einer Umlaufbahn bewegt wird. Mit anderen Worten Ist vorgesehen, dass sich der Conchierbetrieb der Vorrichtung durch eine vorbestimmte Rotationsrichtung der Welle und somit eine vorbestimmte UmlaufrIchtung des Conchierwerkzeugs auszeichnet. Die Umlaufrichtung des Conchierwerkzeugs kann sich insbesondere auf eine Umlaufrichtung von dessen nachfolgend erläuterter Wirkfläche beziehen. Wie nachstehend ebenso erläutert, kann ferner ein Ausförderbetrieb der Vorrichtung zum Ausfördern der Produktmasse aus dem Aufnahmeraum vorgesehen sein. Während dieses Ausförderbetriebs kann die Welle entgegen der Rotationsrichtung des Conchierbetriebs rotieren und das Conchierwerkzeug sich somit in einer zu der ersten Umlaufrichtung entgegengesetzten zweiten Umlaufrichtung entlang der Umlaufbahn bewegen.

Die Umlaufbahn, entlang derer das Conchierwerkzeug bewegt wird, kann konzentrisch um und insbesondere kreisförmig um die Wellenlängsachse verlaufen. Das Conchierwerkzeug kann ferner einen Positionierabschnitt und eine Wirkfläche umfassen. Der Positionierabschnitt kann sich im Wesentlichen radial von der Welle erstrecken und die Wirkfläche mit einer gewünschten Ausrichtung und/oder einem gewünschten Abstand relativ zu der Innenwand des Behälters anordnen. Die Wirkfläche kann sich auch in einem Winkel zu dem Positionierabschnitt erstrecken. Konkret ist erfindungsgemäß vorgesehen, dass die Wirkfläche des Conchierwerkzeugs der Innenwand des Behälters zugewandt ist. Gemäß einer Variante erstreckt sich die Wirkfläche ferner in einem relativ flachen Winkel von z.B. zwischen 0° und 40° relativ zu der Wellenlängsachse oder auch parallel hierzu.

Bei der Wirkfläche kann es sich um denjenigen Abschnitt des Conchierwerkzeugs handeln, der im Conchierbetrieb die gewünschte Bearbeitung der Produktmasse vornimmt und hierfür mit dieser wechselwirkt. Zum Beispiel kann die Wirkfläche dazu ausgebildet sein, die für das Conchieren erforderlichen Kompressions- und/oder Scherkräfte auf die Produktmasse auszuüben. Entsprechend kann die Umlaufbahn des Conchlerwerkzeugs als die Umlaufbahn seiner Wirkfläche bei einer Rotation der Welle definiert sein.

Allgemein kann die Conchiervorrichtung auch eine Mehrzahl von Conchlerwerkzeugen umfassen, die jeweils mit der Welle gekoppelt sind und in vorbestimmter Weise mit dieser rotieren können. Zum Beispiel können mehr als drei Conchlerwerkzeuge vorgesehen sein und insbesondere wenigstens vier, wenigstens fünf oder wenigstens sechs Conchierwerkzeuge. In diesem Zusammenhang können die Conchlerwerkzeuge derart relativ zueinander angeordnet sein, dass ihre Wirkflächen ohne wesentliche axiale Abstände zueinander entlang der Welle aneinandergereiht sind und/oder sich geringfügig axial überlappen. Hierdurch kann eine im Wesentlichen axial durchgängige Abdeckung der Behälterinnenwand oder, anders ausgedrückt, eine axial quasi lückenlose Bearbeitung der Produktmasse entlang der Welle erreicht werden.

Die Wirkfläche ist ferner derart ausgebildet, dass sich ein radialer Spalt zwischen der Behälterinnenwand und der Wirkfläche entgegen der ersten Umlaufrichtung betrachtet zumindest abschnittsweise verringert. Die Wirkfläche kann somit derart ausgebildet sein, dass die Produktmasse zumindest abschnittsweise komprimiert und/oder geschert wird, da sich der Zwischenraum zwischen der Wirkfläche und der Behälterinnenwand bei fortschreitender Bewegung in die erste Umlaufrichtung zunehmend verengt. Genauer gesagt kann die Produktmasse zunächst über einen vergleichweise groß dimensionierten radialen Spalt zwischen die Wirkfläche und die Behälterinnenwand gelangen, wobei sich dieser Spalt jedoch bei einer fortgesetzten Rotation der Welle in der ersten Umlaufrichtung verengt. Dies führt dazu, dass Kompressions- und/oder Scherkräften auf die Produktmasse ausgeübt werden können. Insgesamt kann ein Zwischenraum zwischen der Wirkfläche und der Behälterinnenwand somit zumindest abschnittsweise im Wesentlichen keil- oder trichterförmig sein.

Anders ausgedrückt kann die Wirkfläche im Conchierbetrieb einen einlaufseitigen Bereich umfassen, über den die Produktmasse in einen Zwischenraum zwischen der Wirkfläche und der Behälterinnenwand gelangt. Die Wirkfläche kann auch einen auslaufseitigen Bereich umfassen, der dem einlaufseitigen Bereich entgegen der ersten Umlaufrichtung betrachtet nachgelagert Ist. Ein radialer Abstand (oder mit anderen Worten ein radialer Spalt) zwischen der Wirkfläche und der Behälterinnenwand kann sich zwischen dem einlaufseitigen und dem auslaufseitigen Bereich zumindest abschnittsweise verringern.

Nochmals anders ausgedrückt kann die Wirkfläche derart ausgebildet sein, dass sich ein radialer Spalt zwischen der Behälterinnenwand und der Wirkfläche beim Überstreichen eines vorbestimmten Abschnittes der feststehenden Behälterinnenwand, der insbesondere punktförmig sein kann, zumindest temporär verringert.

Es versteht sich, dass sich der radiale Spalt zwischen der Wirkfläche und der Behälterinnenwand auch abschnittsweise wieder vergrößern kann. Dies kann insbesondere in einem Bereich erfolgen, der entgegen der ersten Umlaufrichtung betrachtet einem Wirkflächenabschnitt mit einem sich verengenden radialen Spalt nachgelagert Ist. Anders ausgedrückt kann die Wirkfläche derart ausgebildet sein, dass sich der radialer Spalt nach erfolgter Kompression und/oder Scherung der Produktmasse zumindest abschnittsweise wieder vergrößert. Insbesondere kann dies auf einen im Conchierbetrieb auslaufseltigen Bereich der Wirkfläche zutreffen.

Allgemein kann die Wirkfläche einen gekrümmten Bereich umfassen, der der Behälterinnenwand gegenüberliegt, und insbesondere einen konvex gekrümmten Bereich. Die Wirkfläche kann somit derart geformt sein, dass sie sich in Richtung der Behälterinnenwand wölbt oder dorthin ausbaucht. Allgemein kann die Wirkfläche Vertiefungen, geneigte Bereiche oder Führungsflächen umfassen, um einen gewünschten Produktstrom durch den Zwischenraum zwischen der Wirkfläche und der Behälterinnenwand zu erzielen. Es ist jedoch auch denkbar, dass die Wirkfläche eine im Wesentlichen glatte und geschlossene Oberfläche aufweist.

Eine Weiterbildung der Erfindung sieht vor, dass die Wirkfläche eine sich entlang der Umlaufbahn erstreckende Vertiefung aufweist. Die Vertiefung kann von einander gegenüberliegenden Randbereichen der Wirkfläche begrenzt sein, die beispielsweise relativ zu der Vertiefung geneigt verlaufen können. Anders ausgedrückt können die Randbereiche geneigte Seitenwandbereiche der Vertiefung bilden. Die Vertiefung kann einen Führungsbereich oder, anders ausgedrückt, einen Führungskanal definieren, der sich entlang der Umlaufbahn erstreckt. Hierdurch kann ein Produktmassenstrom entlang der Wirkfläche und entlang der Umlaufbahn ermöglicht werden.

In diesem Zusammenhang kann ferner vorgesehen sein, dass eine im Wesentlichen quer zu der Umlaufbahn verlaufende Breite der Vertiefung entlang der ersten Umlaufrichtung betrachtet zunimmt. Die Breitenzunahme kann stufenartig erfolgen oder auch kontinuierlich durch eine variable oder konstante Zunahme. Die Vertiefung kann demnach allgemein trichter- oder keilförmig ausgebildet sein, wobei sie sich entgegen der ersten Umlaufrichtung betrachtet verengen kann. Entsprechend kann sich ein von der Vertiefung definierter Führungsbereich oder Führungskanal entgegen der ersten Umlaufrichtung betrachtet verengen, was das Erzeugen der gewünschten Kompressions- und/oder Scherkräfte fördern kann.

Das Conchierwerkzeug kann ferner einen Abstreifer umfassen, der zumindest teilweise von der Wirkfläche entlang der Umlaufbahn betrachtet beabstandet ist. Insbesondere kann der Abstreifer der Wirkfläche entgegen der ersten Umlaufrichtung betrachtet nachgelagert sein und/oder hiermit nur geringfügig entlang der Umlaufbahn überlappen. Die Wirkfläche kann zum Beispiel im Vergleich zu dem Abstreifer in der ersten Umlaufrichtung betrachtet eine vordere Position im Conchierbetrieb einnehmen. Mit anderen Worten kann der Abstreifer im Conchierbetrieb einem auslaufseitigen Bereich der Wirkfläche näher sein als einem einlaufseitigen Bereich. Folglich kann der Abstreifer dazu ausgebildet sein, Im Conchierbetrieb im Wesentlich mit Produktmasse zu wechselwirken, die von der Wirkfläche innerhalb des aktuellen Bewegungs- bzw. Umdrehungszyklus des Conchierwerkzeugs bereits bearbeitet wurde.

Der Abstreifer kann allgemein dazu ausgebildet sein, an der Behälterinnenwand anhaftende Produktmasse zu entfernen und/oder in eine gewünschte Richtung zu fördern. Der Abstreifer kann in einem Abstand von weniger als 3 mm, weniger als 2 mm, ca. 1 mm oder weniger zu der Behälterinnenwand angeordnet sein. Im Vergleich zu der Wirkfläche des Conchierwerkzeugs kann der Abstreifer mit einer deutlich geringeren Fläche ausgebildet sein, mit der er der Behälterinnenwand gegenüberliegt. Diese Fläche kann insbesondere Im Wesentlichen linienförmig sein und beispielsweise weniger als 25%, weniger 10% oder weniger als 5% der von der Wirkfläche des Conchierwerkzeugs definierten Fläche einnehmen.

In diesem Zusammenhang kann ferner vorgesehen sein, dass der Abstreifer über einen Abstandshalter an der Wirkfläche angeordnet ist, wobei der Abstandshalter insbesondere derart ausgebildet ist, dass dieser einen radialen Durchtritt von Produktmasse ermöglicht. Der Abstandshalter kann sich im Wesentlichen parallel zu oder entlang der Umlaufbahn erstrecken und den Abstreifer entlang der Umlaufbahn In einem vorbestimmten Abstand von der Wirkfläche anordnen. Der Abstandshalter kann wenigstens eine Stange, wenigstens ein Profil oder eine andere geeignete Struktur umfassen.

Der Durchtritt der Produktmasse kann sich insbesondere auf ein Produktmassenvolumen beziehen, das entlang der Umlaufbahn betrachtet zwischen dem Abstreifer und der Wirkfläche angeordnet ist. Der Abstreifer kann einen Durchtritt dieses Produktmassenvolumens in Richtung der Welle ermöglichen. Hierzu kann der Abstandshalter eine Öffnung umfassen oder allgemein einen Bereich zwischen dem Abstreifer und der Wirkfläche nicht vollständig abdecken.

Ohne Beschränkung auf die vorstehend im Zusammenhang mit dem Abstreifer erläuterten Merkmale kann der Abstreifer auch elastisch gegen die Behälterinnenwand vorgespannt sein. Das Vorspannen kann allgemein elastisch erfolgen, insbesondere derart, dass der Abstreifer mit einem vorbestimmten Anpressdruck an der Behälterinnenwand anliegt. Hierzu kann der Abstreifer gelenkig mit der Wirkfläche und/oder dem Conchierwekrzeug verbunden sein und federnd in Richtung der Behälterinnenwand gedrängt werden. Auf diese Weise ist ein geringer Abstand oder auch ein Kontakt zwischen dem Abstreifer und der Behälterinnenwand erzielbar, wobei aufgrund des Vorspannens des Abstreifers Fertigungstoleranzen des Behälters ausgeglichen werden.

Der Abstreifer und die Wirkfläche können sich ferner entlang eines gemeinsamen Abschnitts der Wellenlängsachse erstrecken. Mit anderen Worten können der Abstreifer und die Wirkfläche sich zumindest teilweise axial überlappen oder auch Im Wesentlichen vollständig überlappen, also zum Beispiel mit einer übereinstimmenden axialen Länge ausgebildet sein. Eine Ausführungsform sieht vor, dass der Abstreifer bezogen auf die axiale Länge der Wirkfläche um nicht mehr als 50% über die Wirkfläche axial hervorsteht oder um nicht mehr als 25% oder um nicht mehr als 10%.

Der Abstreifer kann ferner derart ausgerichtet sein, dass dieser zumindest bei einer Rotation des Conchierwerkzeugs in eine zweite Umlaufrichtung, die der ersten Umlaufrichtung entgegengesetzt ist, einen Produktmassenstrom In Richtung eines Produktabflusses des Behälters erzeugt. Bei der zweiten Umlaufrichtung kann es sich um eine Umlaufrichtung in dem bereits erwähnten Ausförderbetrleb der Conchlervorrlchtung handeln. In diesem Fall kann der Abstreifer in einer bevorzugten Weise angewinkelt sein, zum Beispiel relativ zu der Wellenlängsachse, und auf diese Welse einen bevorzugten Produktmassenstrom erzeugen. Der Produktabfluss kann insbesondere axial mittig am Behälter sowie an dessen Unterseite angeordnet sein.

Bei einer Mehrzahl von Conchierwerkzeugen können die Abstreifer jeweils nach Maßgabe einer Position der Conchierwerkzeuge entlang der Wellenlängsachse individuell ausgerichtet sein. Insbesondere können diese jeweils derart ausgerichtet sein, dass der vorstehend erläuterte Produktmassenstrom in Richtung der Behältermitte erzeugbar ist. Zum Beispiel können beidseits des Produktabflusses oder der Behältermitte angeordnete Abstreifer entgegengesetzt und/oder gespiegelt zueinander ausgerichtet sein, um die Produktmasse jeweils In Richtung des Produktabflusses fördern zu können. Der Begriff "Behältermitte" kann sich allgemein auf einen axialen mittleren Bereich des Behälters und/oder des Aufnahmeraums beziehen.

Die Abstreifer können somit je nach Rotationsrichtung der Welle unterschiedliche Funktionen übernehmen. Während des Ausförderbetriebs können diese ein schnelles und effizientes Ausfördern der Produktmasse unterstützen, wohingegen im Conchierbetrieb Produktmassenreste von der Behälterinnenwand entfernt werden können. Die Vorrichtung kann ferner wenigstens ein Umlenkwerkzeug umfassen, das mit der Welle zur gemeinsamen Rotation gekoppelt ist, wobei das Umlenkwerkzeug, insbesondere unter einem optionalen Zusammenwirken mit einer benachbarten Behälterinnenwand, dazu ausgebildet ist, einen Produktmassenstrom in Richtung einer Behältermitte zu erzeugen. Das Erzeugen des Produktmassenstroms In Richtung der Behältermitte kann zumindest im Conchierbetrieb der Vorrichtung erfolgen. Das Umlenkwerkzeug kann im Vergleich zu den Wirkflächen der Conchlerwerkzeuge eine deutlich geringere Fläche aufweisen, mit der sie der Behälterinnenwand gegenüberliegt (zum Beispiel weniger als 25%, weniger als 10% oder weniger als 5% der Wirkfläche). Diese Fläche kann ferner im Wesentlichen linienförmig oder langgestreckt sein.

Das Umlenkwerkzeug kann an der Welle axial beabstandet von dem Conchierwerkzeug angeordnet sein. Eine Wirkfläche des Umlenkwerkzeugs, die mit der Produktmasse zum Umlenken wechselwirkt, kann wiederum über einen Positionierabschnitt des Umlenkwerkzeugs radial von der Welle beabstandet sein. Gemäß einer Ausführungsform sind wenigstens zwei Umlenkwerkzeuge vorgesehen, die an gegenüberliegenden axialen Enden des Aufnahmeraums und/oder der Welle angeordnet sind. Dabei können sämtliche Conchierwerkzeuge axial zwischen den wenigstens zwei Umlenkwerkzeugen angeordnet sein. Demnach können die Umlenkwerkzeuge dazu ausgebildet sein, Produktmasse aus den axialen Endbereichen des Aufnahmeraums wieder in Richtung der Behältermitte zu fördern, um einen bevorzugten Produktmassenstrom innerhalb des Aufnahmeraums zu erzeugen.

Das Umlenkwerkzeug kann den Produktmassenstrom im Wesentlichen allein mittels einer hierfür speziell ausgerichteten Wirkfiäche erzielen. Gemäß einer Ausführungsform wird der Produktmassenstrom aber im Wesentlichen im Zusammenwirken mit den benachbarten Behälterinnenwänden und insbesondere mit einem benachbarten axialen Endbereich des Aufnahmeraums erzeugt. Dabei kann das Umlenkwerkzeug derart ausgerichtet sein, dass es im Conchierbetrieb die Produktmasse zunächst weiter axial nach außen und somit weg von der Behältermitte drängt, woraufhin die Produktmasse von den Behälterinnenwänden in Richtung der Behältermitte umgeleitet wird. Ein Zurückführen des Produktmassenstroms in Richtung der Behältermitte kann insbesondere in einem Bereich nahe oder oberhalb der Wellenlängsachse stattfinden.

Übergeordnet hat der Erfinder erkannt, dass sich mittels des Umlenkwerkzeugs ein bevorzugter Produktstrom innerhalb des Aufnahmeraumes erzeugen lässt, der unter anderem zu einer intensiveren Belüftung der Produktmasse führen kann.

Eine Weiterbildung der Erfindung sieht vor, dass eine Länge des Aufnahmeraums entlang der Wellenlängsachse größer ist als eine radiale Erstreckung des Aufnahmeraums. In einem die Wellenlängsachse enthaltenden Schnitt betrachtet (im Folgenden auch als "Längsschnitt" bezeichnet) kann der Aufnahmeraum somit mit einer im Wesentlichen langgestreckten Form ausgebildet sein, zum Beispiel als eine langgestreckte Ellipse.

Zusätzlich oder alternativ ist erfindungsgemäß vorgesehen, dass eine radiale Erstreckung des Aufnahmeraums von jeweils einem axialen Ende des Aufnahmeraums hin zu einem Bereich des größten Querschnitts des Aufnahmeraums zunimmt, wobei in dem oder in der Nähe des Bereichs des größten Querschnitts ein Produktauslauf und/oder Luftauslass angeordnet ist. Die Zunahme der radialen Erstreckung kann im Wesentlichen gleichförmig, variabel oder stufenförmig erfolgen. Bei dem größten Querschnitt kann es sich um einen Bereich handeln, der eine größte radiale Erstreckung des Behälters umfasst, beispielsweise einen größten Durchmesser. Anders ausgedrückt kann es sich um einen Bereich handeln, der den größten Innenumfang des Aufnahmeraums um die Wellenlängsachse umfasst. Der größte Querschnitt kann ferner eine Symmetrieebene des Aufnahmeraums bilden, wobei der Aufnahmeraum im Wesentlichen spiegelsymmetrisch zu dieser Symmetrieebene ausgebildet sein kann.

Gemäß einer Variante ist der Aufnahmeraum in dem vorstehend erläuterten Längsschnitt betrachtet im Wesentlichen ellipsenförmigen, rautenförmig oder als ein Doppelkegel ausgebildet, bei dem die Grundflächen der Kegel aneinander gesetzt sind.

Dabei kann jeweils eine größere Achse der Ellipsen-, Rauten- oder Doppelkegelform mit der Wellenlängsachse zusammenfallen. Zusätzlich oder alternativ kann eine kleinere Achse der Ellipsen-, Rauten- oder Doppelkegelform mit einer radialen Erstreckung zur Wellenlängsachse zusammenfallen und insbesondere den größten Querschnitt des Aufnahmeraums definieren.

Im Rahmen der vorliegenden Offenbarung kann der Behälter allgemein feststehend ausgebildet sein, wobei in seinem Innern die Welle mit den daran angebrachten Conchierwerkzeugen relativ zu dem Behälter bewegt wird. Der Luftauslass und/oder der Produktauslauf können daher ebenfalls allgemein feststehend innerhalb der Conchiervorrichtung angeordnet sein. Beispielsweise kann der Produktauslauf allgemein an einer Unterseite des Behälters angeordnet sein, die einem Bodenbereich in der Umgebung der Conchiervorrichtung zugewandt sein kann. Ebenso kann der Luftauslass an einer Oberseite des Behälters angeordnet sein, die von dem Bodenbereich abgewandt ist. Anders ausgedrückt kann der Produktauslauf unterhalb der Wellenlängsachse angeordnet sein und/oder der Luftauslass kann oberhalb der Wellenlängsachse angeordnet sein.

In einer Ausführungsform können sich der Luftauslass und der Produktauslauf im Wesentlichen gegenüberliegen oder, anders ausgedrückt, an einander gegenüberliegenden Innenwandbereichen des Behälters positioniert sein. Der Produktauslauf und der Luftauslass können je eine Öffnung in die Umgebung bereitstellen, die auch öffen- und schließbar sein kann, zum Beispiel über eine Ventilvorrichtung. Die optionale Nähe zu dem Bereich des größten Querschnitts kann einen axialen Abstand von nicht mehr als 2 m, nicht mehr als 1 m, nicht mehr als 50 cm oder nicht mehr als 20 cm meinen. Insbesondere kann vorgesehen sein, dass zumindest der Produktauslauf unmittelbar in dem Bereich des größten Querschnitts angeordnet ist und der Luftauslass hiervon nur geringfügig axial beabstandet ist.

Die Behälterinnenwände können Förder- oder Führungsschrägen definieren, um die Produktmasse in Richtung des Produktauslaufes zu leiten. Durch Anordnen des Luftauslasses im Bereich des größten Querschnitts kann ferner ein bewusst großer Abstand zu einem Füllpegel der Produktmasse innerhalb des Aufnahmeraums erreicht werden. Dies kann beispielsweise das Austragen von Staub in die Umgebung während des Conchierens begrenzen.

Der Behälter kann ferner einen Lufteinlass umfassen, der derart positioniert ist, dass er im Conchierbetrieb unterhalb eines Füllpegels der Produktmasse anordenbar ist, und/oder wobei der Lufteinlass unterhalb der Wellenlängsachse positioniert ist.

Demnach kann vorgesehen sein, dass im Conchierbetrieb die Produktmasse maximal bis zu einem vorbestimmten Füllpegel eingefüllt wird. Der Lufteinlass kann unterhalb dieses vorbestimmten Füllpegels anordenbar sein. Dies kann wiederum ein Anordnen an oder nahe einer Unterseite des Behälters betreffen, welche einem Bodenbereich in der Umgebung der Conchiervorrichtung zugewandt ist.

Insgesamt wird somit ermöglicht, dass der Produktmasse Luft unterhalb des Füllpegels zugeführt werden kann, aber auch fetthaltige Zusätze, die ebenfalls über den Lufteinlass einspeisbar sind. Der Erfinder hat erkannt, dass auf diese Weise eine bessere Durchmischung und somit ein umfassenderer Austrag von Bitterstoffen aus der Produktmasse erzielbar ist.

Allgemein kann der Lufteinlass derart ausgebildet sein, dass die hierüber zugeführte Luft oder auch etwaige andere Zusätze der Produktmasse im Wesentlichen in der ersten Umlaufrichtung zuführbar sind. Hierfür kann der Lufteinlass einen Zuführkanal umfassen oder bilden. Anders ausgedrückt kann über den Lufteinlass ein zu der ersten Umlaufrichtung und/oder zu der Umlaufbahn des Conchierwerkzeugs und/oder zu der angrenzenden Behälterinnenwand im Wesentlichen tangentiales Zuführen von Luft oder Zusätzen in die Produktmasse ermöglicht werden. Der Begriff "im wesentlichen tangential" kann sich darauf beziehen, dass eine Vektorkomponente der Zuführrichtung, die tangential zu der ersten Umlaufrichtung, der Umlaufbahn oder der Behälterinnenwand verläuft, eine quer hierzu verlaufende Vektorkomponente deutlich übersteigt, insbesondere um das wenigstens zwei-, drei- oder vierfache.

Ohne Beschränkung auf die zuvor im Zusammenhang mit dem Lufteinlass erläuterten Merkmale ist es ferner denkbar, dass der Lufteinlass einen zumindest abschnittsweise verengten Bereich und/oder eine Drosseleinrichtung umfasst. Dieser Bereich beziehungsweise diese Drosseleinrichtung können in der Nähe eines Übergangsbereichs zwischen dem Lufteinlass und dem Aufnahmeraum oder auch unmittelbar in diesem Übergangsbereich angeordnet sein. Ein Beispiel für eine geeignete Drosseleinrichtung ist ein Blech, das den Querschnitt des Lufteinlasses im Übergangsbereich zum Aufnahmeraum lokal verengt. Allgemein ermöglichen diese Varianten, dass die Strömungsgeschwindigkeit der Luftzufuhr aufgrund der Querschnittsverengung des Lufteinlasses gezielt gesteigert wird. Hierdurch ist zum Beispiel eine effektivere Trocknung der Produktmasse erreichbar. Ebenfalls können hierdurch Verschmutzungen im Bereich des Lufteinlasses effektiver entfernt werden, insbesondere in dem vorstehend diskutierten Übergangsbereich.

Die Conchiervorrichtung kann ferner eine Drucklufteinheit umfassen, die dazu ausgebildet Ist, dem Behälter über den Lufteinlass Druckluft zuzuführen, insbesondere derart, dass die Druckluftzufuhr Im Wesentlichen in der ersten Umlaufrichtung erfolgt. Die Drucklufteinheit kann eine Düse umfassen, über die Druckluft in den Lufteinlass selektiv einblasbar ist. Die Düse kann derart positioniert und/oder dimensioniert sein, dass zusätzlich auch eine Zufuhr weiterer Zusätze durch den Lufteinlass möglich ist, beispielsweise in Gestalt von Fetten oder Reinigungsmitteln.

Von dem Begriff Druckluft können auch von herkömmlicher Umgebungsluft verschiedene unter Druck gesetzte Gase oder Gasgemische umfasst sein. Die Zufuhr in der ersten Umlaufrichtung kann sich auf die vorstehend erläuterte tangentiale Zufuhr beziehen. Die zugeführte Druckluft kann einen Luftdruck von zum Beispiel 0,1 bis 0,3 bar über dem Umgebungsdruck aufweisen.

Ferner kann in diesem Zusammenhang vorgesehen sein, dass die Conchiervorrichtung eine Heizeinheit umfasst, die dazu ausgebildet ist, die über den Lufteinlass zuzuführende Luft zu erwärmen. Dies kann insbesondere ein Erwärmen der Luft vor einem Zuführen oder Einblasen in den Aufnahmeraum umfassen, zum Beispiel ein Erwärmen innerhalb eines Druckluftreservoirs.

Die Vorrichtung kann ferner eine Gewichtserfassungseinheit umfassen, die dazu ausgebildet Ist, im Betrieb der Vorrichtung ein Gewicht des Behälters einschließlich der darin enthaltenen Produktmasse zu erfassen. Dabei kann es sich um ein Gewicht der Produktmasse während des Conchierbetriebs handeln, um zum Beispiel einen Feuchtigkeits- und somit Gewichtsverlust der Produktmasse zu überwachen. Die Gewichtserfassungseinheit kann hierfür eine sogenannte Wägezelle umfassen.

Die Conchiervorrichtung kann ferner eine Steuervorrichtung umfassen, die dazu ausgebildet ist, den Conchierbetrieb nach Maßgabe von Erfassungssignalen der Gewichtserfassungseinheit zu steuern und/oder zu regeln. Beispielsweise kann die Steuervorrichtung dazu eingerichtet sein, wenigstens die Rotationsgeschwindigkeit der Welle, die Gesamtdauer des Conchierbetriebs, den Zeitpunkt oder die Menge einer Luftzufuhr sowie eine Temperatur der beheizbaren Behälterwandlungen basierend auf dem erfassten Gewicht und insbesondere einer erfassten Gewichtsabnahme zu steuern.

Die Erfindung betrifft ferner ein Verfahren nach Patentanspruch 17 zum Conchieren einer Produktmasse, insbesondere mittels einer Vorrichtung nach einem der vorhergehenden Aspekte.

Das Verfahren kann demnach vorsehen, mittels der Rotation der speziell ausgebildeten Wirkfläche des Conchierwerkzeugs in der ersten Umlaufrichtung die vorstehend erläuterten Kompressions- und/oder Scherkräfte auf die Produktmasse auszuüben.

Allgemein kann das Verfahren dabei jeglichen weiteren Schritt und jegliches weitere Merkmal umfassen, um sämtliche der vorstehend erläuterten Vorteile und Wechselwirkungen zu erzielen. Beispielsweise kann das Verfahren ferner einen Schritt des Bearbeitens der Produktmasse mittels der Wirkflächen des Conchierwerkzeugs im Conchierbetrieb umfassen und/oder einen Schritt des Ausförderns der Produktmasse mittels des vorstehend geschilderten Abstreifers des Conchierwerkzeugs in einem Ausförderbertrieb.

Gemäß einer Weiterbildung umfasst das Verfahren den Schritt des Zuführens von Luft und/oder eines fetthaltigen Zusatzes unterhalb eines Füllpegels der Produktmasse. Dies kann das vorstehend geschilderte Zuführen über den Lufteinlass des Behälters betreffen und wiederum im Wesentlichen tangential zu der ersten Umlaufrichtung erfolgen.

Ebenso kann das Verfahren den Schritt des Erfassens eines Gewichts der in dem Behälter enthaltenen Produktmasse umfassen, insbesondere um den Entfeuchtungsgrad der Produktmasse festzustellen. Hierzu kann das Gesamtgewicht des Behälters und der darin enthaltenen Produktmasse erfasst werden, woraufhin durch Subtrahieren des bekannten Behälterleergewichts das Gewicht der darin enthaltenen Produktmasse und Insbesondere deren Gewichtsabnahme während des Conchierbetriebs berechnet werden kann. Das Verfahren kann ferner einen Schritt des Steuerns des Conchierbetriebs nach Maßgabe des erfassten Gewichts betreffen, wobei sich das Steuern auf die vorstehend anhand der Steuervorrichtung diskutierten Parameter beziehen kann.

Das Verfahren kann ferner den Schritt des Umkehrens der Umlaufrichtung des Conchierwerkzeugs umfassen, um die Produktmasse aus dem Behälter zu fördern. Dies kann im Rahmen des vorstehend diskutierten Ausförderbertriebs erfolgen. Das Umkehren der Umlaufrichtung kann das Bewegen des Conchierwerkzeugs in eine zur ersten Umlaufrichtung entgegengesetzte zweite Umlaufrichtung betreffen. In diesem Zusammenhang kann ferner ein Schritt des Öffnens eines Produktauslaufs vorgesehen sein, sodass die Produktmasse über den Produktauslauf austreten kann. Dies kann ein Öffnen einer Ventileinrichtung des Produktauslaufs beinhalten.

Schließlich kann das Verfahren ferner den Schritt des Zuführens eines vorbestimmten Anteils einer insgesamt zuzuführenden Menge eines fetthaltigen Zusatzes erst während des Ausförderns der Produktmasse aus dem Behälter umfassen. Hierdurch kann erreicht werden, dass der fetthaltige Zusatz eine Reinigungsfunktion übernimmt, um Rückstände der Produktmasse effektiv aus dem Aufnahmeraum des Behälters zu entfernen.

Bevorzugte Ausführungsformen der Erfindung werden nachfolgend anhand der beigefügten schematischen Zeichnungen näher erläutert. Es stellen dar:
- Figur 1: eine Längsschnittansicht einer Conchiervorrichtung gemäß einem ersten Ausführungsbeispiel;
- Figur 2: eine perspektivische Einzelteilansicht der Welle der Conchiervorrichtung aus Figur 1;
- Figur 3: eine perspektivische Einzelteilansicht eines Conchierwerkzeugs der Conchiervorrichtung aus Figur 1;
- Figur 4: eine Querschnittsansicht der Vorrichtung aus Figur 1 zum Erläutern eines Conchierbetriebs der Vorrichtung;
- Figur 5: eine perspektivische Einzelteilansicht eines Conchierwerkzeugs gemäß einer weiteren Ausführungsform; und
- Figur 6: ein Ablaufschema eines erfindungsgemäßen Verfahrens.

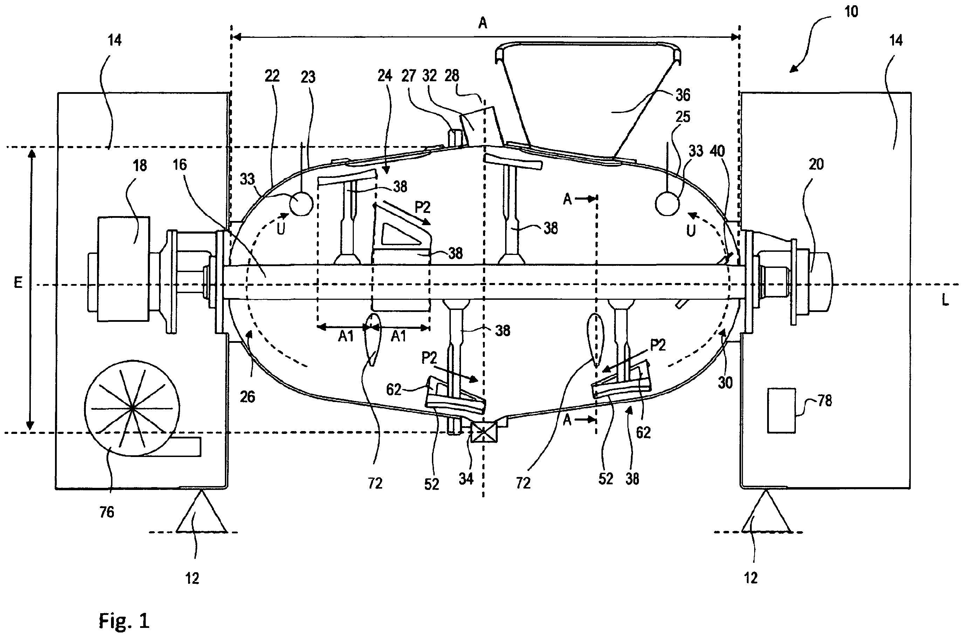

In Figur 1 ist eine Conchiervorrichtung gemäß einer ersten Ausführungsform der Erfindung gezeigt und allgemein mit 10 bezeichnet. Die Conchiervorrichtung 10 stützt sich an einer horizontalen Bodenfläche in ihrer Umgebung über Auflager 12 ab. Die Conchiervorrichtung 10 umfasst ferner zwei seitliche Rahmenanordnungen 14, die voneinander beabstandet und jeweils über eine der Auflagereinheiten 12 gelagert sind. Zwischen den Rahmenanordnungen 14 erstreckt sich eine zylindrische Welle 16, die in den Rahmenanordnungen 14 jeweils drehbar gelagert ist. Die Welle 16 verläuft entlang einer Wellenlängsachse L, entlang derer die Rahmenanordnungen 14 voneinander beabstandet sind.

In der In Figur 1 linken Rahmenanordnung 14 ist die Welle 16 mit einer Antriebseinheit 18 gekoppelt. Die Antriebseinheit 18 ist dazu ausgebildet, die Welle 16 zur Rotation um ihre Längsachse L anzutreiben. In der in Figur 1 rechten Rahmenanordnung 14 ist die Welle 16 in einer Lagereinheit 20 um ihre Längsachse L drehbar gelagert.

Die Conchiervorrichtung 10 umfasst ferner einen Behälter 22, der sich zwischen den Rahmenanordnungen 14 entlang der Wellenlängsachse L erstreckt. Der Behälter 22 ist feststehend mit den Rahmenanordnungen 14 gekoppelt und allgemein hohl ausgebildet. Genauer gesagt bildet der Behälter 22 einen Aufnahmeraum 24, der durch entsprechende Innenwände des Behälters 22 begrenzt wird. Der Behälter 22 und der Aufnahmeraum 24 sind geschlossen ausgebildet, mit Ausnahme der nachfolgend erläuterten Öffnungen.

In Figur 1 erkennt man, dass der Behälter 22 denjenigen Abschnitt der Welle 16 aufnimmt, der sich zwischen den Rahmenanordnungen 14 sowie zwischen der Antriebseinheit 18 und der Lagereinheit 20 erstreckt. Die Form des Behälters 22 entspricht ferner der Form des Aufnahmeraums 24 oder, anders ausgedrückt, der Außenquerschnitt des Behälters 22 entspricht im Wesentlichen dem Innenquerschnitt des Aufnahmeraums 24. Im gezeigten Fall ist der Behälter 22 und somit auch der Aufnahmeraum 24 im Wesentlichen rotationssymmetrisch zur Wellenlängsachse L ausgebildet, wobei die Wellenlängsachse L konzentrisch in dem Behälter 22 aufgenommen ist und sich durch diesen erstreckt. Eine axiale Länge A des vom Behälter 22 gebildeten Aufnahmeraums 24 übersteigt ferner eine maximale radiale Erstreckung E des Aufnahmeraums 24.

Konkret erkennt man, dass die radiale Erstreckung E des Aufnahmeraums 24 von einem ersten axialen Endbereich 26 nahe der Antriebseinheit 18 zu einem Bereich 28 eines größten Querschnitts oder, anders ausgedrückt, einer größten radialen Erstreckung E zunimmt. In gleichem Sinne nimmt eine radiale Erstreckung E ausgehend von einem zweiten axialen Endbereich 30 des Aufnahmeraums 24 nahe der Lagereinheit 20 In Richtung des Bereichs 28 des größten Querschnitts zu. Mit anderen Worten nimmt eine radiale Erstreckung E des Aufnahmeraums 24 ausgehend von dessen jeweiligen axialen Enden 26, 30 hin zu dem Bereich 28 des größten Querschnitts fortlaufend zu. Der Aufnahmeraum 24 ist demnach ellipsenförmig ausgebildet, wobei die kleinere Ellipsenachse der in Figur 1 gezeigten radialen Erstreckung E entspricht. Die Form des Aufnahmeraums 24 kann auch als Doppelkegel mit aneinander gesetzten Grundflächen und in den Endbereichen 26, 30 abgerundeten Spitzen beschrieben werden. Die Spitzen können zum Beispiel kugelförmig gerundet oder alternativ auch als flache Enden ausgebildet sein. Abschließend Ist darauf hinzuweisen, dass der Bereich 28 des größten Querschnitts eine orthogonal zur Wellenlängsachse L verlaufende Symmetrieebene bildet. Der Aufnahmeraum 24 ist im Wesentlichen spiegelsymmetrisch zu dieser Symmetrieebene ausgebildet.

Man beachte, dass der Behälter 22 in Figur 1 zwei Behälterhälften 23, 25 umfasst, die jedoch nicht in dem Bereich 28 des größten Querschnitts zusammengesetzt sind. Stattdessen zeichnet sich die in Figur 1 rechte Behälterhälfte 25 durch eine größere axiale Länge aus und erstreckt sich ausgehend von dem rechten axialen Endbereich 30 axial über den Bereich 28 des größten Querschnitts hinaus. Die in Figur 1 linke Behälterhälfte 23 hingegen erstreckt sich ausgehend von dem linken axialen Endbereich 26 in Richtung der anderen Behälterhälfte 25. Die Behälterhälften 23, 25 werden entlang eines die Wellenlängsachse L umlaufenden Flansches 27 zusammengesetzt und miteinander verbunden.

Dieser Behälteraufbau mit zwei Behälterteilen oder -hälften 23, 25 unterschiedlicher axialer Länge, die außerhalb des Bereichs 28 des größten axialen Querschnitts zusammengesetzt sind, stellt für sich einen unabhängigen Aspekt der Erfindung dar und ist nicht auf eine Kombination mit den weiteren Merkmalen des vorliegenden Ausführungsbeispiels beschränkt.

In dem Bereich 28 des größten Querschnitts ist an einer von dem Bodenbereich sowie den Auflagereinheiten 12 abgewandten Oberseite ein Luftauslass 32 angeordnet. An einer gegenüberliegenden Stelle und damit dem Bodenbereich sowie den Auflagereinheiten 12 zugewandt ist ein Produktabfluss 34 mit einer selektiv öffen- und schließbaren Ventileinrichtung angeordnet. Ferner erkennt man in Figur 1 einen Einfülltrichter 36, über den eine zu bearbeitende Produktmasse beziehungsweise deren Rohstoffe in den Aufnahmeraum 24 einfüllbar ist.

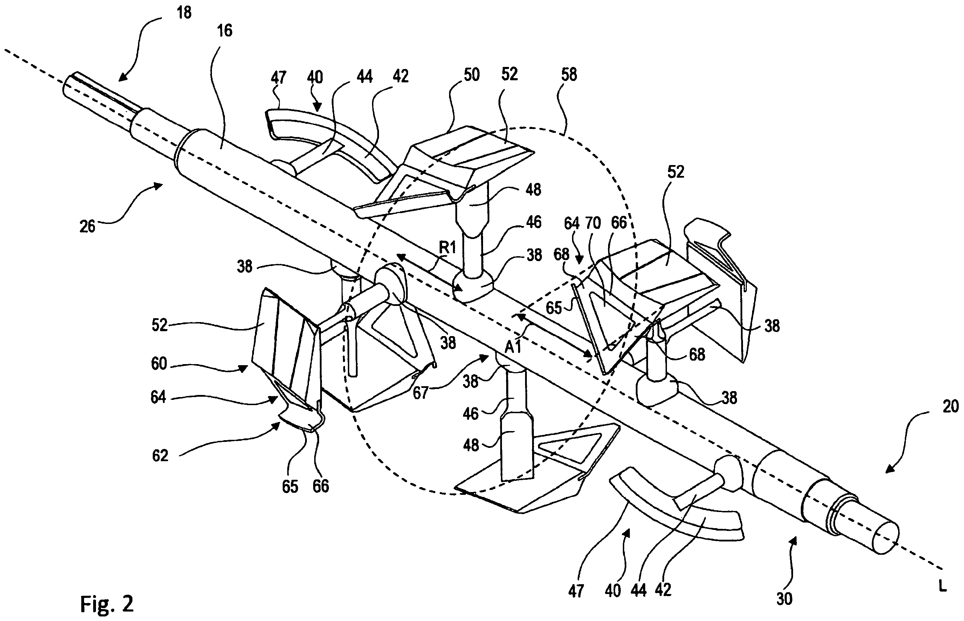

Die Welle 16, deren Wellenlängsachse L im gezeigten Fall eine Horizontale im Raum bildet, ist mittels der Antriebseinheit 18 relativ zu dem feststehenden Behälter 22 um ihre Längsachse L drehbar. An Ihrem in dem Behälter 22 aufgenommenen Abschnitt weist die Welle mehrere Conchier- und Umlenkwerkzeuge 38, 40 auf. Die genaue Anordnung und Anzahl dieser Werkzeuge 38, 40 wird aus der perspektivischen Einzeldarstellung von Figur 2 deutlich, in der auch die Positionen der Antriebs- und Lagereinheit 18, 20 der Conchiervorrichtung 10 angedeutet sind.

In Figur 2 erkennt man, dass die Welle 16 an ihren axialen Enden nahe den Endbereichen 26, 30 des Aufnahmeraums 24 sowie nahe der Antriebs- beziehungsweise Lagereinheit 18, 20 jeweils ein Umlenkwerkzug 40 aufweist. Das Umlenkwerkzeug 40 umfasst einen gekrümmten Umlenkabschnitt 42, der über einen Positionierabschnitt 44 in einem vorbestimmten radialen Abstand zu der Welle 16 angeordnet ist. Der Umlenkabschnitt 42 weist eine der Behälterinnenwand zugewandte und im Wesentlichen linienförmige Fläche 47 auf. Wie man in Figur 1 erkennt, ist diese in vorbestimmter Weise relativ zu der Wellenlängsachse L geneigt, sodass sie einen gewünschten Produktmassenstrom innerhalb des Aufnahmeraums 24 erzeugen kann. Entlang der Wellenlängsachse L sowie axial zwischen den Umlenkwerkzeugen 40 sind ferner insgesamt sechs Conchierwerkzeuge 38 in gleichmäßigen axialen Abständen R1 zueinander angeordnet. Mit Ausnahme ihrer Positionierung entlang der Wellenlängsachse L sowie in Umfangsrichtung der Welle 16 sind die Conchierwerkzeuge 38 weitestgehend identisch zueinander ausgebildet. Eine weitere Ausnahme hiervon bildet zum Beispiel die nachfolgend erläuterte Ausrichtung von Abstreifern 62 der jeweiligen Conchierwerkzeuge 38. Aus Gründen der Übersichtlichkeit sind in den Figuren 1 und 2 nicht für sämtliche der Conchierwerkzeuge 38 stets alle der nachfolgend erläuterten Merkmale mit gesonderten Bezugszeichen versehen.

Die Conchierwerkzeuge 38 umfassen jeweils einen Positionierabschnitt 46, der sich radial von der Wellenlängsachse L in Richtung einer gegenüberliegenden Behälterinnenwand erstreckt. Der Positionierabschnitt 46 hat nahe der Welle 16 einen im Wesentlichen runden Querschnitt, der in einen abgeflachten Bereich 48 übergeht. Eine Ausrichtung des abgeflachten Bereichs 48 ist zur Minderung von Strömungswiderständen je nach Position des Conchierwerkzeugs 38 entlang der Wellenlängsachse L individuell gewählt (siehe Figur 2).

An einem radial äußeren Ende des abgeflachten Bereichs 48 ist eine Unterseite eines Arbeitsbereichs 50 des jeweiligen Conchierwerkzeugs 38 angeordnet. Der Arbeitsbereich 50 erstreckt sich in einem Winkel zu dem Positionierabschnitt 46 sowie entlang einer gegenüberliegenden Behälterinnenwand. Ferner umfasst der Arbeitsbereich 50 jeweils eine der Behälterinnenwand zugewandte Wirkfläche 52 (siehe auch Figur 1).

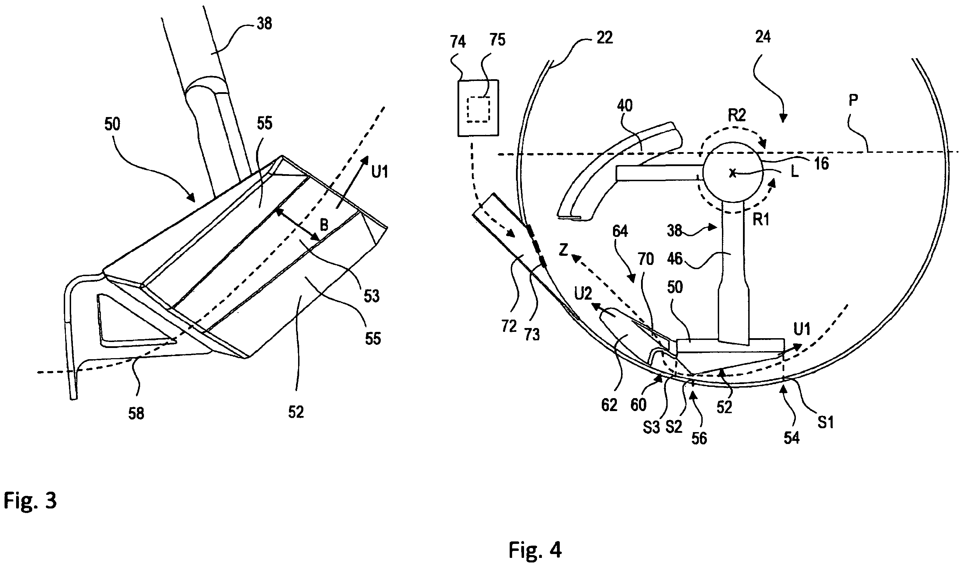

Die Struktur und Funktion dieser Wirkfläche 52 wird nachfolgend zunächst anhand von Figur 4 erläutert. Figur 4 zeigt eine Querschnittsdarstellung der Conchiervorrichtung 10 aus Figur 1, wobei eine Lage der Schnittebene A-A in Figur 1 eingetragen ist. Der Behälter 22 ist in Figur 4 lediglich schematisch und mit einem nach oben offenen Querschnitt dargestellt.

In Figur 4 erkennt man zunächst die Welle 16, wobei die Wellenlängsachse L senkrecht auf der Blattebene steht. Ferner Ist ein Umlenkwerkzeug 40 sowie ein Conchierwerkzeug 38 gezeigt. In Figur 4 erkennt man weiterhin den sich radial von der Welle 16 erstreckenden Positionierabschnitt 46 sowie den daran angeordneten Arbeitsbereich 50 des Conchierwerkzeugs 38. Schließlich wird ersichtlich, dass die Wirkfläche 52 der Behälterinnenwand zugewandt ist, die den Aufnahmeraum 24 definiert.

Die Wirkfläche 52 weist einen ersten Bereich 54 und einen zweiten Bereich 56 auf, die entlang des Innenumfangs des Behälters 22 voneinander beabstandet sind. Genauer gesagt Ist die Conchiervorrichtung 10 dazu ausgebildet, die Welle 16 in einem Conchierbetrieb in eine erste Rotationsrichtung R1 zu rotieren und folglich auch die damit gekoppelten Umlenk- und Conchierwerkzeuge 38, 40 in diese Richtung zu bewegen. Dabei wird die Wirkfläche 52 jedes Conchierwerkzeugs 38 relativ zu der Behälterinnenwand In eine erste Umlaufrichtung U1 bewegt.

Der Arbeitsbereich 50 und insbesondere die Wirkfläche 52 jedes Conchierwerkzeugs 38 wird dabei jeweils entlang einer kreisförmigen Umlaufbahn 58 um die Wellenlängsachse L entlang der Behälterinnenwand bewegt. Der Verlauf einer solchen Umlaufbahn 58 ist in Figur 2 schematisch gezeigt, wobei diese Umlaufbahn 58 dem in dieser Figur dritten Conchierwerkzeug 38 von links zugeordnet ist. Der Vollständigkeit halber sei erwähnt, dass sich In Figur 1 bei einer Bewegung in die erste Rotations- sowie Umlaufrichtung R1, U1 die unteren beiden Conchierwerkzeuge 38 in Richtung des Betrachters bewegen.

Zurückkommend auf Figur 4 erkennt man, dass der erste Bereich 54 der Wirkfläche 52 in der ersten Umlaufrichtung U1 betrachtet dem zweiten Bereich 56 vorgelagert ist. Mit anderen Worten bildet der erste Bereich 54 einen im Conchierbetrieb der Vorrichtung 10 einlaufseltigen Bereich der Wirkfläche 52, wohingegen der zweite Bereich 56 einen auslaufseitigen Bereich bildet.

Demnach erkennt man in Figur 4, dass ein radialer Spalt S1, S2 oder, anders ausgedrückt, ein radialer Abstand S1, S2 zwischen der Wirkfläche 52 und der Behälterinnenwand in der ersten Umlaufrichtung U1 betrachtet variiert. Genauer gesagt nimmt die Größe dieses radialen Spalts S1, S2 von dem ersten zum zweiten Bereich 54, 56 ab, sodass sich ein Zwischenraum zwischen der Wirkfläche 52 und der Behälterinnenwand 22 zunehmend verengt (sh. Fig.4: S1>S2). Man erkennt in Figur 4 aber ebenso, dass sich dieser Spalt S3 in einem Wirkflächenbereich 60 wieder vergrößert, wobei der Wirkflächenbereich 60 dem zweiten Bereich 56 entgegen der ersten Umlaufrichtung U1 betrachtet nachgelagert ist.

Zusammengefasst ist die Wirkfläche 52 somit derart ausgebildet, dass sich zumindest im Conchierbetrieb und bei einer Bewegung in die erste Umlaufrichtung U1 ein radialer Spalt S1, S2 zwischen der Wirkfläche 52 und der Behälterinnenwand zumindest abschnittsweise verringert. Folglich erkennt man in Figur 4, dass der von der Wirkfläche 52 und der Behälterinnenwand begrenzte Zwischenraum im Wesentlichen keil- oder trichterförmig ist und sich entgegen der ersten Umlaufrichtung U1 betrachtet verjüngt und zuspitzt. Bei einer fortgesetzten Rotation der Welle 16 in die Richtung R1 werden somit jeweils aufeinanderfolgende Innenumfangsabschnitte des Behälters 22 von der Wirkfläche 52 überstrichen. Dabei kommt es aus Sicht eines feststehenden Punktes auf der Behälterinnenwand zu einer zumindest temporären Verringerung des radialen Spalts S1, S2.

Weitere Einzelheiten zur Struktur und Funktion der Wirkfläche 52 eines jeden Conchierwerkzeugs 52 ergeben sich aus Figur 3. Dort Ist zu erkennen, dass die Wirkfläche 52 eine axial mittig angeordnete Vertiefung 53 umfasst, die sich entlang der Umlaufbahn 58 und somit in Umlaufrichtung U1 der Wirkfläche 52 erstreckt. Die Lage der Wellenlängsachse relativ zur Wirkfläche 52 ergibt sich dabei aus Figur 1. Ferner erkennt man in Figur 3, dass eine axiale Breite B der Vertiefung 53 entgegen der Umlaufrichtung U1 betrachtet abnimmt. Mit anderen Worten verjüngt sich die Vertiefung 53 zunehmend, was vorteilhaft für das Erzeugen von Kompressions- und/oder Scherkräften auf die zu bearbeitende Produktmasse ist. Die Vertiefung 53 ist ferner von Randbereichen 55 der Wirkfläche 52 umgeben, die sich ebenfalls entlang der Umlaufbahn 58 erstrecken und die Vertiefung 53 mittig aufnehmen und begrenzen. Die Randbereiche 55 sind relativ zu der Ebene der Vertiefung 53 geneigt.

Im Folgenden bezugnehmend auf Figur 2 erkennt man, dass die Conchierwerkzeuge 38 ferner jeweils einen Abstreifer 62 umfassen. Dieser Ist über einen Abstandshalter 64 mit dem Arbeitsbereich 50 eines jeweiligen Conchierwerkzeugs 38 gekoppelt. Genauer gesagt umfasst der Abstreifer 62 eine der Behälterinnenwand zugewandte linienförmige Fläche 65 und einen sich im Wesentlichen radial zu der Behälterinnenwand erstreckenden flächigen Bereich 66. Der Abstandshalter 64 ist nahe des sich aufweitenden Bereichs 60 der Wirkfläche 52 mit dieser verbunden (siehe auch Fig. 4).

Der Abstandshalter 64 umfasst im vorliegenden Fall einen ersten Abschnitt 66, der sich axial entlang der Wirkfläche 52 erstreckt, sowie zwei hiervon in Umlaufrichtung abstehende Abschnitte 68 (siehe Figur 2, rechte Hälfte). Insgesamt erstreckt sich der Abstandshalter 64 In einem Im Wesentlichen gleichbleibenden Abstand zu der gegenüberliegenden Behälterinnenwand. Die in Umlaufrichtung verlaufenden Abschnitte 68 sind unterschiedlich bemessen, sodass der Abstreifer 62 und insbesondere dessen der Behälterinnenwand zugewandte Fläche 65 In vorbestimmter Weise ausgerichtet sind. Beispielsweise erkennt man bei den beiden unteren Abstreifern 62 in Figur 1, dass diese entgegengesetzt zueinander sowie relativ zu der Wellenlängsachse L geneigt sind.

Zusammengefasst dient der Abstandshalter 64 dazu, den Abstreifer 62 mit der Wirkfläche 52 eines jeweiligen Conchierwerkzeugs 38 zu koppeln. Ferner ist der Abstandshalter 64 über seine in Figur 2 gezeigten Abschnitte 68 dazu ausgebildet, den Abstreifer 62 mit einer vorbestimmten Ausrichtung und in einem vorbestimmten Abstand relativ zur Wirkfläche 52 und zur Behälterinnenwand anzuordnen. Alternativ oder zusätzlich kann der Abstreifer 62 auch gegen die Behälterinnenwand elastisch vorgespannt sein, was zum Beispiel über eine geeignete federnde Einrichtung zwischen dem Abstreifer 62 und Wirkfläche 52 erfolgen kann.

Wie sich ferner aus Figur 4 verdeutlicht, ist der Abstreifer 62 entgegen der ersten Umlaufrichtung U1 betrachtet der Wirkfläche 52 nachgelagert. Ferner begrenzen der Abstandshalter 64 und der Abstreifer 62 eine Öffnung 70, die einen radialen Durchtritt von Produktmasse erlaubt. In Figur 1 erkennt man schließlich, dass der Abstreifer 62 und die Wirkfläche 52 einen im Wesentlichen identischen axialen Abschnitt A1 der Wellenlängsachse L überspannen oder, anders ausgedrückt, sich entlang des Abschnitts A1 axial überlappen.

Im Folgenden wird basierend auf den vorstehend erläuterten Figuren ein Conchierbetrieb der Conchiervorrlchtung 10 beschrieben. In den Behälter 22 werden zunächst über den Einfülltrichter 36 die Rohstoffe der zu bearbeitenden Produktmasse zugeführt. Dies kann manuell oder, insbesondere bei größeren Anlagen, maschinell erfolgen, zum Beispiel über separate Rohrleitungsstutzen. Die Rohstoffe umfassen Im vorliegenden Fall Kakaomasse, Zucker, Kakaobutter und Milchpulver, um hieraus eine Produktmasse zur Schokoladenherstellung zu gewinnen. In Figur 4 ist ein Produktpegel P schematisch angedeutet, bis zu welchem die Produktmasse in dem Behälter 22 ansteigt.

Dann wird die Welle 16 mittels der Antriebseinheit 18 in der ersten Rotationsrichtung R1 angetrieben, sodass die Conchierwerkzeuge 38 und insbesondere deren Wirkflächen 52 In der ersten Umlaufrichtung U1 entlang ihrer jeweiligen Umlaufbahn 58 bewegt werden. Bei einer Bewegung der Wirkflächen 52 unterhalb der Wellenlängsachse L gelangt ein gewisser Anteil der Produktmasse in den Zwischenraum zwischen der Wirkfläche 52 und einem gegenüberliegenden Bereich der Behälterinnenwand. Aufgrund des anhand von Figur 4 erläuterten sich verengenden Spalts S1, S2 zwischen diesen Elementen Ist dieser Anteil der Produktmasse einem zunehmenden Kompressionsdruck und/oder Scherkräften ausgesetzt (sogenanntes Conchieren). Dies führt zu einem gewünschten Vermengen und Durchmischen der Produktmasse und insbesondere dem sukzessiven Austragen von Bitterstoffen.

Ein möglicher Pfad Z eines entsprechenden Produktmassenantells ist schematisch in Figur 4 angedeutet. Man erkennt, dass sich der Pfad Z entlang der Wirkfläche 52 erstreckt und anschließend in den Bereich des Abstreifers 62 gelangt. Der Abstreifer 62 ist dazu ausgebildet, einen bereits von der Wirkfläche 52 bearbeiteten Anteil der Produktmasse von der Behälterinnenwand zu lösen. Ebenso kann ein bereits bearbeiteter Produktmassenanteil durch die Öffnung 70 zwischen dem Abstandshalter 64 und dem Abstreifer 62 radial hindurchtreten.

In Figur 1 erkennt man ferner, dass die Conchierwerkzeuge 38 entlang der Wellenlängsachse derart positioniert sind, dass diese jeweils unmittelbar aneinander angrenzende axiale Abschnitte A1 der Welle 16 überspannen. Dabei sind in Figur 1 nicht sämtliche entsprechenden axialen Abschnitte A1 eingetragen. Mit anderen Worten kann die Produktmasse von den Conchierwerkzeugen 38 axial praktisch lückenlos bearbeitet werden. Anhand des in Figur 4 eingetragenen Produktpegels P versteht es sich, dass das Bearbeiten der Produktmasse lediglich dann stattfindet, wenn sich die Wirkflächen 52 unterhalb der Wellenlängsachse L befinden. Dies betrifft die in Figur 1 jeweils unterhalb der Wellenlängsachse L positionierten Conchierwerkzeuge 38, wohingegen die oberhalb der Wellenlängsachse L positionierten Conchierwerkzeuge 38 oberhalb des Produktpegels P und somit außerhalb der Produktmasse angeordnet sind.

Ferner erkennt man in Figur 1, dass die Umlenkwerkzeuge 40, von denen In Figur 1 nur eines erkennbar ist, bei einer Rotation Im Conchierbetrieb einen Produktmassenstrom U erzeugen, der die Produktmasse an einen jeweils benachbarten axialen Endbereich 26, 30 des Aufnahmeraums 24 drängt. Dies führt dazu, dass die Produktmasse gemäß dem Pfeil U im Conchierbetrieb kontinuierlich über die axialen Endbereiche 26, 30 in Richtung der Behältermitte umgelenkt wird. Dabei ist mit Behältermitte eine axiale Mitte umfassend den Bereich 28 des größten Querschnitts gemeint. Konkret wird die Produktmasse aus einem Bereich unterhalb der Wellenlängsachse entlang der Behälterinnenwände bis ungefähr auf Höhe der Wellenlängsachse L oder auch darüber hinaus geführt, von wo aus sie zur Behältermitte strömt.

Der Behälter 22 umfasst ferner zwei Abstreifrollen 33, die jeweils nahe einem der axialen Endbereiche 26, 30 angeordnet sind. Die Abstreifrollen 33 sind dazu ausgebildet, mit den axial äußeren Conchierwerkzeugen 38 zu wechselwirken und daran anhaftende Produktmasse abzustreifen.

Durch Fortsetzen der Rotation der Welle 16 über mehrere Minuten oder Stunden kann somit die Produktmasse conchiert werden.

Im Folgenden wird ferner eine Luftzufuhr während des Conchierbetriebs geschildert. In Figur 1 erkennt man, dass der Behälter 22 beidseits seiner axialen Mitte jeweils mindestens einen Lufteinlass 72 umfasst. Gemäß weiteren Ausführungsformen können aber auch jeweils mindestens zwei, mindestens vier oder mindestens sechs Lufteinlässe 72 beidseits der axialen Mitte vorgesehen sein. Der Lufteinlass 72 Ist ferner unterhalb der Wellenlängsachse L angeordnet. Dies verdeutlicht sich ferner aus Figur 4, in der man zudem erkennt, dass der Lufteinlass 72 auch unterhalb des Produktpegels P positioniert ist. Der Lufteinlass 72 definiert einen Zuführkanal, der derart ausgerichtet ist, dass die Luft im Wesentlichen tangential zu der angrenzenden Behälterinnenwand, der ersten Umlaufrichtung U1 sowie einer entlang des Lufteinlasses 72 bewegten Wirkfläche 52 in den Aufnahmeraum 24 und in die darin aufgenommene Produktmasse einleitbar ist.

Das Zuführen der Luft kann über eine In Figur 4 schematisch angedeutete Drucklufteinheit 74 erfolgen, welche die Luft vor dem Zuführen mittels einer Heizeinheit 75 auf eine vorbestimmte Temperatur erwärmen kann. Durch den Lufteinlass 72 können auch fetthaltige Zusätze unterhalb des Produktpegels P zugeführt werden.

Des Weiteren ist in Figur 1 ein Gebläse 76 der Drucklufteinheit 74 gezeigt, das innerhalb einer der seitlichen Rahmenanordnungen 14 der Conchiervorrichtung 10 angeordnet Ist. Ein Verbindungskanal zwischen dem Gebläse 76 und den Lufteinlässen 72 Ist nicht dargestellt, kann jedoch in üblicher Weise über Rohre, Schläuche oder Fluidkanäle erfolgen.

In Figur 4 ist ferner eine optionale Drosseleinrichtung 73 strichliert angedeutet, die im gezeigten Fall als ein Blechbauteil ausgebildet ist. Die Drosseleinrichtung 73 ist in dem Übergangsbereich zwischen dem Lufteinlass 72 und dem Aufnahmeraum 24 angeordnet und verengt dort den Strömungsquerschnitt des Lufteinlasses 72. Somit wird eine Strömungsgeschwindigkeit der zugeführten Druckluft erhöht, wodurch Verschmutzungen leichter aus dem Übergangsbereich entfernbar sind und die Produktmasse effektiver getrocknet wird.

Abschließend ist darauf hinzuweisen, dass die Conchiervorrichtung 10 eine Gewichtserfassungseinheit In Form einer in Figur 1 schematisch angedeuteten Wägezelle 78 umfassen kann. Diese kann in bekannter Welse ein Gewicht des Behälters 22 mitsamt der darin eingefüllten Produktmasse erfassen und daraus auch eine Gewichtsänderung der Produktmasse innerhalb des Behälters 22 während des Conchier- und/oder des Ausförderbetriebs erfassen. Darauf basierend kann der Fortschritt des Conchierens oder Ausförderns überwacht und der Betrieb der Vorrichtung 10 über eine nicht dargestellte Steuereinheit geeignet angepasst werden.

Ferner ergibt sich zwischen den Figuren 1, 2 und 4 eine geringfügige Abweichung dahingehend, dass im Falle der Figuren 1 und 2 ein Übergangsbereich zwischen den Conchierwerkzeugen 38 und der Welle 16 sockelförmig ausgebildet ist. Ein entsprechender Übergangssockel 67 ist in Figur 2 beispielhaft für eines der Conchierwerkzeuge 38 mit einem gesonderten Bezugszeichen versehen. Im Fall von Figur 4 sind derartige Übergangssockel 67 aus Vereinfachungsgründen nicht abgebildet, dort aber ebenso vorgesehen. Prinzipiell Ist es aber denkbar, die Conchiervorrichtung 10 wahlweise auch ohne derartige Übergangssockel 67 auszubilden.

Anhand der Figuren 1 und 4 wird im Folgenden ein Ausförderbetrieb der Conchiervorrichtung 10 beschrieben. In dem Ausförderbetrieb wird die Antriebswelle 16 in eine zu der ersten Rotationsrichtung R1 entgegengesetzten Rotationsrichtung R2 gedreht (siehe Figur 4). Folglich wird auch das Conchierwerkzeug 38 aus Figur 4 und insbesondere dessen Wirkfläche 52 In einer zu der ersten Umlaufrichtung U1 entgegengesetzten Umlaufrichtung U2 rotiert. Dies bedeutet, dass die Produktmasse im Wesentlichen mit dem Abstreifer 62 wechselwirkt und von diesem weitestgehend von der Wirkfläche 52 weggeleitet wird.

Konkret erkennt man in Figur 1, dass die Abstreifer 62 der Conchierwerkzeuge 38 jeweils derart ausgerichtet sind, dass sie bei einer entsprechenden Rotation der Welle 16 in die Rotationsrichtung R2 einen Produktmassenstrom P2 in Richtung der Behältermitte beziehungsweise des größten radialen Querschnitts 28 erzeugen. Dies führt dazu, dass die Produktmasse rasch über den axial mittig angeordneten Produktauslauf 34 aus dem Behälter 22 ausförderbar ist. Dies wird ferner durch den vorstehend erläuterten ellipsenförmigen Längsschnitt des Aufnahmeraums 24 unterstützt. Aufgrund dieser Form definieren die Behälterinnenwände nahe des Produktauslaufs 34 Führungsschrägen, sodass die Produktmasse unter Einwirkung der Schwerkraft in Richtung des Produktauslaufs 34 fließt.

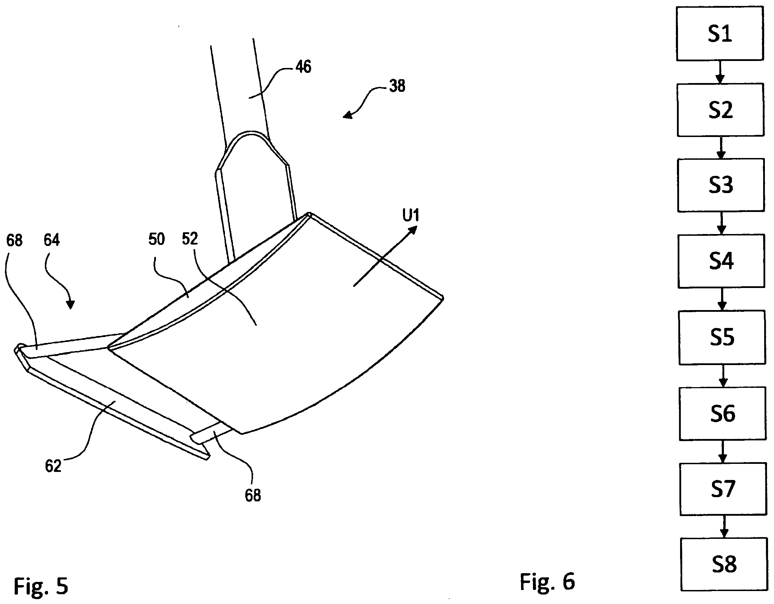

In Figur 5 ist ein Conchierwerkzeug 38 gemäß einer alternativen Ausführungsform einer erfindungsgemäßen Conchiervorrichtung 10 gezeigt. Im Vergleich zu der ersten Ausführungsform sind dabei gleichwirkende oder gleichartige Merkmale mit gleichen Bezugszeichen bezeichnet. Das Conchierwerkzeug 38 umfasst wiederum einen Positionierabschnitt 46, an dessen radial äußeren Ende ein Arbeitsbereich 50 des Conchierwerkzeugs 38 angeordnet ist. Dieser unterscheidet sich von der ersten Ausführungsform dadurch, dass die Wirkfläche 52 mit einer ebenen und konvex In Richtung der gegenüberliegenden Behälterinnenwand gekrümmten Wirkfläche 52 ausgebildet Ist. Ein Krümmungsradius der Wirkfläche 52 und/oder eine Ausrichtung des Arbeitsbereiches 50 relativ zu der Innenwand ist dabei derart gewählt, dass sich im Conchierbetrieb erneut eine radiale Spaltverengung einstellt, wie vorstehend anhand von Figur 4 erläutert.

In Figur 5 ist ferner ein Abstreifer 62 zu erkennen, welcher der Wirkfläche 52 entgegen der ersten Umlaufrichtung U1 betrachtet nachgelagert Ist. Dies erfolgt wiederrum über einen Abstandshalter 64, der zwei sich im Wesentlichen parallel zu der Behälterinnenwand erstreckende Stege 68 umfasst. Der Abstreifer 62 ist über den Abstandshalter 64 wiederum derart ausgerichtet, dass die im Ausförderbetrieb geschilderte Förderwirkung in Richtung des Produktauslaufs 34 erzielt wird.

Anhand von Figur 6 wird abschließend ein Beispiel für den Ablauf eines erfindungsgemäßen Verfahrens geschildert. In einem ersten Schritt S1 wird der Behälter 22 über den Einfülltrichter 36 mit den die Produktmasse bildenden Rohstoffen befüllt, hier im Wesentlichen Kakaomasse, Zucker, Kakaobutter und Milchpulver. Dies kann wiederum manuell oder, insbesondere bei größeren Anlagen, maschinell erfolgen, zum Beispiel über geeignete Rohrleitungsstutzen.

Daraufhin wird in einem zweiten Schritt S2 die Welle 16 in der ersten Rotationsrichtung R1 angetrieben, um die einzelnen Bestandteile zu einem möglichst homogenen Gemisch zu vermischen und dieses Gemisch aufzulockern. Dieser auch als Vormischen bezeichnete Schritt S2 kann ein Antreiben der Welle 16 für drei bis zehn Minuten umfassen.

Im Schritt S3 erfolgt anschließend ein sogenanntes Trockenconchieren unter Fortsetzung der Wellenrotation. Dabei wird zusätzlich Heißluft über die Lufteinlässe 72 aus Figur 4 eingeblasen, sodass diese unterhalb des Produktpegels P in die Produktmasse gelangt. Dies fördert die Durchmischung und das Austragen von Bitterstoffen. Aufgrund des im Wesentlichen tangentialen Zuführens der Luft, die zudem auf eine bestimmte Temperatur vorgewärmt ist, wird auch die Verteilung der Luft innerhalb der Produktmasse verbessert. Je nach gewünschter Produktqualität und den Eigenschaften der Produktmasse kann dieser Schritt über eine deutlich längere Zeitdauer als das Vormischen gemäß dem Schritt S2 andauern.

Die Luftzufuhr kann im Rahmen des Schritts S3 in vorbestimmten Zeitintervallen erfolgen. Parallel dazu erfolgt ein Austragen von Luft und darin enthaltener Feuchtigkeit über dem Luftauslass 32 des Behälters 22 (siehe Figur 1). Dies führt zu einem zunehmenden Gewichtsverlust der Produktmasse, der mittels der Wägezelle 78 aus Figur 1 erfasst werden kann. Das Erfassen dieser Gewichtsreduktion (beziehungsweise des sich daraus ergebenden Entfeuchtungsgrades) ist in Figur 3 als ein gesonderter Schritt S4 gezeigt. Dieser Schritt kann jedoch mit dem Schritt S3 auch zeitlich überlappen oder gänzlich parallel hierzu ausgeführt werden. Der Conchierbetrieb des Schritts S3 kann ferner laufend an die erfasste Gewichtsreduktion angepasst werden. Ein typischer Gewichtsverlust, der nach einem vervollständigten Trockenconchieren vorliegt, kann zum Beispiel ca. 1% des Gewichts der ursprünglichen Produktmasse umfassen.

Während des Trockenconchierens in Schritt S3 kann die Produktmasse einen Fettanteil von maximal 23 % und insbesondere von 12% bis 15% umfassen. Dies kann jedoch je nach Produktmasse und dem herzustellenden Endprodukt variieren. Beim Herstellen von Bitterschokolade kann zum Beispiel auf das Hinzufügen von Milchpulver verzichtet werden, sodass der Fettanteil steigt.

Bis einschließlich der Schritte S3 und S4 erfolgt zunächst keine weitere Flüssigkeits- oder Fettzugabe, sodass die Produktmasse nur unter dem geschilderten Zuführen von Heißluft bearbeitet wird. Im Schritt S5 erfolgt hingegen das Zuführen eines fetthaltigen Zusatzes, was unter fortgesetzter Rotation der Welle 16 In die erste Rotationsrichtung R1 zu einem Verflüssigen der Produktmasse führt. Wie geschildert, kann dieser fetthaltige Zusatz über die tangentialen Lufteinlässe 72 unterhalb des Produktpegels P zugeführt werden. Ferner können bei einem Zuführen über die Lufteinlässe 72 auch darin vorhandene Produktanhaftungen gelöst und die Lufteinlässe 72 somit gereinigt werden.

Wenn das Conchieren abgeschlossen ist, kann in Schritt S6 mit dem Ausförderbetrieb der Conchiervorrichtung 10 begonnen werden. Wie vorstehend geschildert, wird die Welle 16 dabei in der entgegengesetzten zweiten Rotationsrichtung R2 angetrieben, sodass die Abstreifer 62 die Produktmasse in Richtung des axial mittigen Produktauslaufes 34 fördern. Hierbei wird die Ventilanordnung des Produktauslaufes 34 geöffnet. Ferner kann ein vorbestimmter Anteil des Insgesamt zuzuführenden fetthaltigen Zusatzes erst in diesem Schritt oder kurz davor zugeführt werden, um das Anhaften von Produktmasseresten an der Behälterinnenwand zu vermeiden und eine möglichst umfassende Entleerung des Behälters 22 zu erreichen. Mittels dieser Methode wurde beispielsweise erreicht, dass weniger als 0,5% und insbesondere weniger als 0,2% oder weniger als 0,1 Prozent der Gesamtmasse in dem Behälter 22 zurückbleiben.

Daraufhin kann in Schritt S7 mit dem Reinigungsbetrieb begonnen werden. Dieser kann automatisch einsetzen, wenn die vorstehend geschilderte Produktentleerung stattgefunden hat, was wiederrum über ein Erfassen einer Gewichtsabnahme der Produktmasse In dem Behälter 22 festgestellt werden kann. Eine Reinigung des Behälters 22 kann mit Wasser, Fett oder anderen geeigneten Reinigungsmitteln erfolgen. Dabei kann in Schritt S8 auch ein Unterdruck innerhalb des Behälters 22 erzeugt werden. Hierdurch wird ein Siedepunkt des Wassers heruntergesetzt und darüber hinaus der Austrag verbleibender Produktmasse und/oder von Reinigungsmittel aus dem Behälter 22 gefördert. Die Zufuhr von Reinigungsmittel kann wiederum über die tangentialen Lufteinlässe 72 erfolgen und/oder über Reinigungsköpfe, die nahe der Rollen 33 In Figur 1 angeordnet sind.

In Schritt S8 erfolgt anschließend eine Trocknung des Aufnahmeraums 24 des Behälters 22. Dies kann wiederum durch Erzeugen eines Unterdrucks, eine Rotation der Welle 16, eine Zufuhr von Heißluft und/oder ein Beheizen der Behälterwände erfolgen. Abschließend ist festzuhalten, dass insbesondere die Schritte S2 und S4 rein optional sind.

## Patentansprüche

1. Conchiervorrichtung (10), mit:
- einem Behälter (22), der einen Aufnahmeraum (24) für eine Produktmasse bildet,
- einer zumindest abschnittsweise in dem Behälter (22) aufgenommenen Welle (16), die dazu ausgebildet ist, um ihre Längsachse (L) zu rotieren, und
- wenigstens einem Conchierwerkzeug (38), das mit der Welle (16) zur gemeinsamen Rotation gekoppelt ist, so dass sich das Conchierwerkzeug (38) in einem Conchierbetrieb der Conchiervorrichtung (10) in einer ersten Umlaufrichtung (U1) entlang einer Umlaufbahn (58) bewegt,
wobei das Conchierwerkzeug (38) eine der Innenwand des Behälters (22) zugewandte Wirkfläche (52) umfasst,
wobei die Wirkfläche (52) derart ausgebildet ist, dass sich ein radialer Spalt (S) zwischen der Behälterinnenwand und der Wirkfläche (52) entgegen der ersten Umlaufrichtung (U1) betrachtet zumindest abschnittsweise verringert,
**dadurch gekennzeichnet, dass**
- der Aufnahmeraum (24) in einem Bereich in Richtung der Längsachse (L) gesehen einen größten Querschnitt (28) aufweist, wobei
- eine radiale Erstreckung (E) des Aufnahmeraums (24) von jeweils einem axialen Ende (26, 30) des Aufnahmeraums (24) hin zu dem Bereich des größten Querschnitts (28) des Aufnahmeraums (24) zunimmt, und wobei in dem oder in der Nähe von dem Bereich des größten Querschnitts (28) ein Produktauslauf (34) und/oder ein Luftauslass (32) angeordnet ist.

2. Conchiervorrichtung nach Anspruch 1,
wobei der Bereich (28) des größten Querschnitts des Aufnahmeraums (24) eine zur Längsachse (L) orthogonale Symmetrieebene bildet.

3. Conchiervorrichtung nach Anspruch 1 oder 2,
wobei der Aufnahmeraum (24) ellipsenförmig ausgebildet ist und die kleinere Ellipsenachse der radialen Erstreckung (E) entspricht.

4. Conchiervorrichtung nach einem der Ansprüche 1 bis 3,
wobei der Produktauslauf (34) an einer Unterseite des Behälters (22) und/oder der Luftauslass (32) an einer Oberseite Behälters (22) angeordnet ist.

5. Conchiervorrichtung nach Anspruch 1,
wobei die Wirkfläche (52) eine sich entlang der Umlaufbahn (58) erstreckende Vertiefung (53) aufweist.

6. Conchiervorrichtung nach Anspruch 5,
wobei eine im Wesentlichen quer zu der Umlaufbahn (58) verlaufende Breite (B) der Vertiefung (53) entlang der ersten Umlaufrichtung (U1) betrachtet zunimmt.

7. Conchiervorrichtung nach einem der vorhergehenden Ansprüche,
wobei das Conchierwerkzeug (38) einen Abstreifer (62) umfasst, der von der Wirkfläche (52) entlang der Umlaufbahn (58) betrachtet zumindest teilweise beabstandet ist.

8. Conchiervorrichtung nach Anspruch 7,
wobei der Abstreifer (62) mittels eines Abstandshalters (64) an der Wirkfläche (52) angeordnet ist, wobei der Abstandshalter (64) insbesondere derart ausgebildet ist, dass er einen radialen Durchtritt von Produktmasse ermöglicht.

9. Conchiervorrichtung nach Anspruch 7 oder 8,
wobei sich der Abstreifer (62) und die Wirkfläche (52) entlang eines gemeinsamen Abschnitts (A1) der Wellenlängsachse (L) erstrecken.

10. Conchiervorrichtung nach einem der Ansprüche 7 bis 9,
wobei der Abstreifer (62) derart ausgerichtet ist, dass er zumindest bei einer Rotation des Conchierwerkzeugs (38) in eine zweite Umlaufrichtung (U2), die der ersten Umlaufrichtung (U1) entgegengesetzt ist, einen Produktmassenstrom in Richtung eines Produktabflusses (34) des Behälters (22) erzeugt.

11. Conchiervorrichtung nach einem der vorhergehenden Ansprüche,
wobei die Conchiervorrichtung (10) ferner wenigstens ein Umlenkwerkzeug (40) umfasst, das mit der Welle (16) zur gemeinsamen Rotation gekoppelt ist, wobei das Umlenkwerkzeug (40), insbesondere unter optionalem Zusammenwirken mit einer benachbarten Behälterinnenwand, dazu ausgebildet ist, einen Produktmassenstrom in Richtung einer Behältermitte zu erzeugen.

12. Conchiervorrichtung nach einem der vorhergehenden Ansprüche,
wobei die Länge (A) des Aufnahmeraums (24) entlang der Wellenlängsachse (L) größer ist als eine radiale Erstreckung (E) des Aufnahmeraums (24).

13. Conchiervorrichtung nach einem der vorhergehenden Ansprüche,
wobei der Behälter (22) einen Lufteinlass (72) umfasst, der so positioniert ist, dass er im Conchierbetrieb unterhalb eines Füllpegels (P) der Produktmasse anordenbar ist, und/oder wobei der Lufteinlass (72) unterhalb der Wellenlängsachse (L) positioniert ist.

14. Conchiervorrichtung nach Anspruch 13,
wobei die Conchiervorrichtung eine Drucklufteinheit (74) umfasst, die dazu ausgebildet ist, dem Behälter (22) durch den Lufteinlass (72) Druckluft zuzuführen, insbesondere derart, dass die Druckluftzufuhr im Wesentlichen in der ersten Umlaufrichtung (U1) erfolgt.

15. Conchiervorrichtung nach Anspruch 13 oder 14,
wobei die Conchiervorrichtung (10) ferner eine Heizeinheit (75) umfasst, die dazu ausgebildet ist, die über den Lufteinlass (72) zuzuführende Luft zu erwärmen.

16. Conchiervorrichtung nach einem der vorhergehenden Ansprüche,
wobei die Conchiervorrichtung (10) eine Gewichtserfassungseinheit (78) umfasst, die dazu ausgebildet ist, im Betrieb der Conchiervorrichtung (10) ein Gewicht des Behälters (22) einschließlich der darin enthaltenen Produktmasse zu erfassen.

17. Verfahren zum Conchieren einer Produktmasse, insbesondere mittels einer Conchiervorrichtung (10) nach einem der vorhergehenden Ansprüche, umfassend die Schritte:
- Einfüllen einer Produktmasse in einen von einem Behälter (22) gebildeten Aufnahmeraum (24), der in einem Bereich in Richtung der Längsachse (L) gesehen einen größten Querschnitt (28) aufweist, wobei eine radiale Erstreckung (E) des Aufnahmeraums (24) von jeweils einem axialen Ende (26, 30) des Aufnahmeraums (24) hin zu dem Bereich des größten Querschnitts (28) des Aufnahmeraums (24) zunimmt, und wobei in dem oder in der Nähe von dem Bereich des größten Querschnitts (28) ein Produktauslauf (34) und/oder ein Luftauslass (32) angeordnet ist,
- Drehen einer zumindest abschnittsweise in dem Behälter (22) aufgenommenen Welle (16) um ihre Längsachse (L), und
- Bewegen eines Conchierwerkzeugs (38), das mit der Welle (16) zur gemeinsamen Rotation gekoppelt ist, in einer ersten Umlaufrichtung (U1) entlang einer Umlaufbahn (58),
wobei das Conchierwerkzeug eine der Innenwand des Behälters (22) zugewandte Wirkfläche (52) umfasst, und
wobei die Wirkfläche (52) derart ausgebildet ist, dass sich ein radialer Spalt (S) zwischen der Behälterinnenwand und der Wirkfläche (52) entgegen der ersten Umlaufrichtung (U1) betrachtet zumindest abschnittsweise verringert.

18. Verfahren nach Anspruch 17,
ferner umfassend den Schritt:
- Zuführen von Luft und/oder einem fetthaltigen Zusatz unterhalb eines Füllpegels (P) der Produktmasse.

19. Verfahren nach Anspruch 17 oder 18,
ferner umfassend den Schritt:
- Erfassen eines Gewichts der in dem Behälter (22) enthaltenen Produktmasse.

20. Verfahren nach einem der Ansprüche 17 bis 19,
ferner umfassend den Schritt:
- Umkehren der Umlaufrichtung (U1, U2) des Conchierwerkzeugs (38), um die Produktmasse aus dem Behälter (22) zu fördern.

21. Verfahren nach einem der Ansprüche 17 bis 20,
ferner umfassend den Schritt:
- Zuführen eines vorbestimmten Anteils einer insgesamt zuzuführenden Menge eines fetthaltigen Zusatzes erst während des Ausförderns der Produktmasse aus dem Behälter (22).

## Claims

1. Conching apparatus (10), comprising:
- a container (22) which forms a receiving space (24) for a product mass,
- a shaft (16) which is accommodated at least in part in the container (22) and is configured to rotate about its longitudinal axis (L), and
- at least one conching tool (38) which is coupled with the shaft (16) for joint rotation therewith so that the conching tool (38), during conching operation of the conching apparatus (10), moves in a first direction of revolution (U1) along a path of revolution (58),
wherein the conching tool (38) comprises an active surface (52) facing the inside wall of the container (22),
wherein the active surface (52) is configured such that a radial gap (S) between the inside wall of the container and the active surface (52) decreases at least in part when viewed contrary to the first direction of revolution (U1),
**characterised in that**
- the receiving space (24), in a region seen in the direction of the longitudinal axis (L), has a largest cross-section (28), wherein
- a radial extent (E) of the receiving space (24) increases from each axial end (26, 30) of the receiving space (24) to the region of the largest cross-section (28) of the receiving space (24), and wherein a product outlet (34) and/or an air outlet (32) is arranged in or in the vicinity of the region of the largest cross-section (28).

2. Conching apparatus according to claim 1,
wherein the region (28) of the largest cross-section of the receiving space (24) forms a plane of symmetry orthogonal to the longitudinal axis (L).

3. Conching apparatus according to claim 1 or 2,
wherein the receiving space (24) has the shape of an ellipse and the smaller axis of the ellipse corresponds to the radial extent (E).

4. Conching apparatus according to any one of claims 1 to 3,
wherein the product outlet (34) is arranged on a lower side of the container (22) and/or the air outlet (32) is arranged on an upper side of the container (22).

5. Conching apparatus according to claim 1,
wherein the active surface (52) has a depression (53) extending along the path of revolution (58).

6. Conching apparatus according to claim 5,
wherein a width (B), running substantially transverse to the path of revolution (58), of the depression (53) increases when viewed along the first direction of revolution (U1).

7. Conching apparatus according to any one of the preceding claims,
wherein the conching tool (38) comprises a scraper (62) which is spaced apart from the active surface (52) at least in part when viewed along the path of revolution (58).

8. Conching apparatus according to claim 7,
wherein the scraper (62) is arranged on the active surface (52) by means of a spacer (64), wherein the spacer (64) is in particular configured such that it permits the radial passage of product mass.

9. Conching apparatus according to claim 7 or 8,
wherein the scraper (62) and the active surface (52) extend along a common portion (A1) of the longitudinal axis (L) of the shaft.

10. Conching apparatus according to any one of claims 7 to 9,
wherein the scraper (62) is oriented such that, at least on rotation of the conching tool (38) in a second direction of revolution (U2) which is opposite to the first direction of revolution (U1), it generates a product mass stream in the direction towards a product outlet (34) of the container (22).

11. Conching apparatus according to any one of the preceding claims,
wherein the conching apparatus (10) further comprises at least one deflecting tool (40) which is coupled with the shaft (16) for joint rotation therewith, wherein the deflecting tool (40), in particular by optional cooperation with an adjacent inside wall of the container, is configured to generate a product mass stream in the direction towards the center of the container.

12. Conching apparatus according to any one of the preceding claims,
wherein the length (A) of the receiving space (24) along the longitudinal axis (L) of the shaft is greater than a radial extent (E) of the receiving space (24).

13. Conching apparatus according to any one of the preceding claims,
wherein the container (22) comprises an air inlet (72) which is so positioned that, during the conching operation, it can be arranged beneath a fill level (P) of the product mass, and/or wherein the air inlet (72) is positioned beneath the longitudinal axis (L) of the shaft.

14. Conching apparatus according to claim 13,
wherein the conching apparatus comprises a compressed air unit (74) which is configured to supply compressed air to the container (22) through the air inlet (72), in particular such that the supply of compressed air takes place substantially in the first direction of revolution (U1).

15. Conching apparatus according to claim 13 or 14,
wherein the conching apparatus (10) further comprises a heating unit (75) which is configured to heat the air that is to be supplied via the air inlet (72).

16. Conching apparatus according to any one of the preceding claims,
wherein the conching apparatus (10) comprises a weight acquisition unit (78) which is configured to acquire, during operation of the conching apparatus (10), the weight of the container (22) including the product mass contained therein.

17. Method for conching a product mass, in particular by means of a conching apparatus (10) according to any one of the preceding claims, comprising the steps:
- introducing a product mass into a receiving space (24) which is formed by a container (22) and which has a largest cross-section (28) in a region seen in the direction of the longitudinal axis (L), wherein a radial extent (E) of the receiving space (24) increases from each axial end (26, 30) of the receiving space (24) to the region of the largest cross-section (28) of the receiving space (24), and wherein a product outlet (34) and/or an air outlet (32) is arranged in or in the vicinity of the region of the largest cross-section (28),
- rotating a shaft (16) which is accommodated at least in part in the container (22) about its longitudinal axis (L), and
- moving a conching tool (38), which is coupled with the shaft (16) for joint rotation therewith, in a first direction of revolution (U1) along a path of revolution (58),
wherein the conching tool comprises an active surface (52) facing the inside wall of the container (22), and
wherein the active surface (52) is configured such that a radial gap (S) between the inside wall of the container and the active surface (52) decreases at least in part when viewed contrary to the first direction of revolution (U1).

18. Method according to claim 17,
further comprising the step:
- supplying air and/or a fat-containing additive beneath a fill level (P) of the product mass.

19. Method according to claim 17 or 18,
further comprising the step:
- acquiring the weight of the product mass contained in the container (22).

20. Method according to any one of claims 17 to 19,
further comprising the step:
- reversing the direction of revolution (U1, U2) of the conching tool (38) in order to convey the product mass out of the container (22).

21. Method according to any one of claims 17 to 20,
further comprising the step:
- supplying a predetermined portion of a total quantity of a fat-containing additive that is to be supplied, only during discharge of the product mass from the container (22).

## Revendications

1. Dispositif de conchage (10), comprenant :
- un récipient (22) qui forme un espace de réception (24) pour un mélange de produits,
- un arbre logé au moins à certains endroits dans le récipient (22), qui est conçu pour tourner autour de son axe longitudinal (L), et
- au moins un outil de conchage (38) qui est accouplé à l'arbre (16) pour tourner ensemble, de manière à ce que l'outil de conchage (38) se déplace, lorsque le dispositif de conchage (10) est en cours de fonctionnement, dans une première direction périphérique (U1) le long d'une trajectoire périphérique (58), dans lequel l'outil de conchage (38) comprend une surface active (52) orientée vers la paroi intérieure du récipient (22),
dans lequel la surface active (52) est conçue de manière à ce qu'une fente radiale (S) entre la paroi intérieure de récipient et la surface active (52) diminue au moins à certains endroits, lorsqu'elle est observée à l'encontre de la première direction périphérique (U1),
**caractérisé en ce que**
- l'espace de réception (24) présente une section transversale (28) maximale dans une zone en direction de l'axe longitudinal (L),
- une étendue radiale (E) de l'espace de réception (24) augmentant à partir de chaque extrémité radiale (26, 30) de l'espace de réception (24) jusqu'à la zone de la section transversale (28) maximale de l'espace de réception (24), et dans laquelle ou à proximité de la zone de la section transversale (28) maximale est disposée une sortie de produit (34) et/ou une sortie d'air (32).

2. Dispositif de conchage selon la revendication 1, dans lequel la zone (28) de la section transversale maximale de l'espace de réception (24) forme un plan de symétrie orthogonale par rapport à l'axe longitudinal (L).

3. Dispositif de conchage selon la revendication 1 ou 2, dans lequel l'espace de réception (24) est ellipsoïdal et le petit axe de l'ellipse correspond à l'étendue radiale (E).

4. Dispositif de conchage selon l'une quelconque des revendications 1 à 3, dans lequel la sortie de produit (34) est disposée sur un côté inférieur du récipient (22) et/ou la sortie d'air (32) est disposée sur un côté supérieur du récipient (22).

5. Dispositif de conchage selon la revendication 1, dans lequel la surface active (52) comporte une cavité (53) qui s'étend le long de la trajectoire périphérique (58).

6. Dispositif de conchage selon la revendication 5, dans lequel une largeur (B) de la cavité (53) partant sensiblement en diagonale par rapport à la trajectoire périphérique (58) augmente lorsqu'elle est observée le long de la première direction périphérique (U1).

7. Dispositif de conchage selon l'une quelconque des revendications précédentes, dans lequel l'outil de conchage (38) comprend un racloir (62) qui est éloigné, au moins à certains endroits, de la surface active (52) lorsqu'il est observé le long du chemin périphérique (58).

8. Dispositif de conchage selon la revendication 7, dans lequel le racleur (62) est disposé au moyen d'une entretoise (64) sur la surface active (52), l'entretoise (64) étant conçue de telle sorte à ce qu'elle permette au mélange de produits de traverser radialement.

9. Dispositif de conchage selon la revendication 7 ou 8, dans lequel le racloir (62) et la surface active (52) s'étendent le long d'une section commune (A1) de l'axe longitudinal d'arbre (L).

10. Dispositif selon l'une des revendications 7 à 9, dans lequel le racloir (62) est conçu de manière à ce qu'il produise au moins lors d'une rotation de l'outil de conchage (38) dans une seconde direction périphérique (U2) qui est à l'opposé de la première direction périphérique (U1) un écoulement de mélange de produits dans la direction d'une sortie de produit (34) du récipient (22).

11. Dispositif de conchage selon l'une quelconque des revendications précédentes, dans lequel le dispositif de conchage (10) comprend en outre au moins un outil de direction (40) qui est accouplé à l'arbre (16) pour leur rotation conjointe, l'outil de direction (40), en particulier dans une interaction optimale avec la paroi intérieure de récipient à proximité, étant conçu pour produire un écoulement du mélange de produits dans la direction d'un centre de récipient.

12. Dispositif de conchage selon l'une quelconque des revendications précédentes, dans lequel la longueur (A) de l'espace de réception (24) le long de l'axe longitudinal d'arbre (L) est supérieure à une étendue radiale (E ) de l'espace de réception (24).

13. Dispositif selon l'une quelconque des revendications précédentes, dans lequel le récipient (22) comprend une entrée d'air (72) qui est positionnée de telle sorte qu'elle puisse être disposée sous un niveau de remplissage (P) du mélange de produits lorsque le conchage est en cours, et/ou dans lequel l'entrée d'air (72) soit positionnée sous l'axe longitudinal d'arbre (L).

14. Dispositif de conchage selon la revendication 13, dans lequel le dispositif de conchage comprend une unité d'air comprimé (74) qui est conçue pour amener de l'air comprimé au récipient (22) par l'intermédiaire de l'entrée d'air (72), en particulier de telle sorte que l'amenée d'air comprimé s'effectue essentiellement dans la première direction périphérique (U1).

15. Dispositif de conchage selon la revendication 13 ou 14, dans lequel le dispositif de conchage (10) comprend en outre une unité de chauffage (75) qui est conçue pour chauffer l'air à amener par l'intermédiaire de l'entrée d'air (72).

16. Dispositif de conchage selon l'une quelconque des revendications précédentes, dans lequel le dispositif de conchage (10) comprend une unité de détection de poids (78) qui est conçue pour détecter, lorsque le dispositif de conchage (10) est en cours de fonctionnement, un poids du récipient (22) y compris celui du mélange de produits contenu en son sein.

17. Procédé de conchage d'une masse de produit, en particulier au moyen d'un dispositif de conchage (10) selon l'une quelconque des revendications précédentes, comprenant les étapes consistant à :
- verser un mélange de produits dans un espace de réception (24) formé par un récipient (22) qui comporte dans une zone en direction de l'axe longitudinal (L) la plus grande section transversale (28), une étendue radiale (E) de l'espace de réception (24) augmentant depuis chaque extrémité axiale (26, 30) de l'espace de réception (24) jusqu'à la zone de la plus grande section transversale (28) de l'espace de réception (24), et dans lequel ou à proximité de la zone de la plus grande section transversale (28) est disposée une sortie de produit (34) et/ou une sortie d'air (32),
- faire tourner un arbre (16) logé au moins à certains endroits dans le récipient (22) autour de son arbre longitudinal (L), et
- déplacer un outil de conchage (38) qui est accouplé à l'arbre (16) pour leur rotation commune, dans une première direction périphérique (U1) le long d'un chemin périphérique (58),
l'outil de conchage comprenant une surface active (52) orientée vers la paroi intérieure du récipient (22), et
la surface active (52) étant conçue de manière à ce qu'une fente radiale (S) se réduise au moins à certains endroits entre la paroi intérieure de récipient et la surface active (52) lorsqu'elle est observée à l'opposé de la première direction périphérique (U1).

18. Procédé selon la revendication 17, comprenant en outre l'étape consistant à :
- amener de l'air et/ou un additif à base de graisse sous un niveau de remplissage (P) à la masse de produit.

19. Procédé selon la revendication 17 ou 18, comprenant en outre l'étape consistant à :
- détecter une poids du mélange de produits contenu dans le récipient (22).

20. Procédé selon l'une quelconque des revendications 17 à 19, comprenant en outre l'étape consistant à :
- intervertir la direction périphérique (U1, U2) de l'outil de conchage (38) pour acheminer le mélange de produits provenant du récipient (22).

21. Procédé selon l'une quelconque des revendications 17 à 20, comprenant en outre l'étape consistant à :
- amener une proportion prédéfinie d'une quantité totale à amener d'un additif à base de graisse d'abord pendant l'extraction du mélange de produits à partir du récipient (22).
